# EUROPEAN PATENT SPECIFICATION

(11) **EP 4 278 622 B1**
(45) Date of publication and mention of the grant of the patent: **17.12.2025**
(21) Application number: 22739085.3
(22) Date of filing: 13.01.2022
(51) Int. Cl.: H04W 12/63, H04W 12/02, H04W 4/02, H04W 8/18, H04W 8/20, H04W 48/02, H04L 45/0377, H04W 60/04, H04W 4/14, H04W 76/18

(54) **METHOD AND APPARATUS FOR ROUTING INFORMATION RETRIEVAL**
VERFAHREN UND VORRICHTUNG ZUM ROUTING VON INFORMATIONSABRUFEN
PROCÉDÉ ET APPAREIL D'EXTRACTION D'INFORMATIONS DE ROUTAGE

(30) Priority: 15.01.2021 WO PCT/CN2021/072107
(43) Date of publication of application: 22.11.2023
(60) Divisional application: 25212580.2
(73) Proprietor: Telefonaktiebolaget LM Ericsson (publ), 164 83 Stockholm (SE)
(72) Inventor: LONG, Hongxia, Shanghai 200335 (CN)
(74) Representative: Ericsson
(86) International application number: PCT/CN2022/071804
(87) International publication number: WO 2022/152209

(56) References cited:
- WO-A1-2020/215658
- CN-A- 112 119 647
- ERICSSON: "Definition of missing error conditions in SMSF registration information retrieval", vol. CT WG4, no. E-Meeting; 20200818 - 20200828, 7 September 2020 (2020-09-07), XP051930478, Retrieved from the Internet <URL:https://ftp.3gpp.org/3guInternal/3GPP_Ultimate_CRPacks/CP-202111.zip 29503_CR0468_(Rel-16)_C4-204093-SMSF-Error-Conditions-29503.docx> [retrieved on 20200907]
- "3rd Generation Partnership Project; Technical Specification Group Core Network and Terminals; 5G System; Unified Data Management Services; Stage 3 (Release 16)", vol. CT WG4, no. V16.5.0, 25 September 2020 (2020-09-25), pages 1 - 362, XP051961068, Retrieved from the Internet <URL:ftp://ftp.3gpp.org/Specs/archive/29_series/29.503/29503-g50.zip 29503-g50.docx> [retrieved on 20200925]
- NTT DOCOMO ET AL: "Introduction of Call Barring for SMS in PS domain", 3GPP DRAFT; N4-021502, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. CN WG4, no. Bangkok; 20021117, 17 November 2002 (2002-11-17), XP050081131
- HUAWEI: "Pseudo-CR on Solution of KI x - Common SBI-based interface between UDM+HSS and SMS-GMSC/IP-SMS-GW/SMS-Router", 3GPP DRAFT; C4-210084, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. CT WG4, no. E-Meeting; 20210125 - 20210129, 15 January 2021 (2021-01-15), Mobile Competence Centre ; 650, route des Lucioles ; F-06921 Sophia-Antipolis Cedex ; France , XP051973235
- HUAWEI: "Pseudo-CR on Solution of KI y - Enhancement on UDM-HSS interworking when using SBI", 3GPP DRAFT; C4-210083, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. CT WG4, no. E-Meeting; 20210125 - 20210129, 15 January 2021 (2021-01-15), Mobile Competence Centre ; 650, route des Lucioles ; F-06921 Sophia-Antipolis Cedex ; France , XP051973234
- ERICSSON: "Definition of missing error conditions in SMSF registration information retrieval", 3GPP DRAFT; C4-204093, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. CT WG4, no. E-Meeting; 20200818 - 20200828, 11 August 2020 (2020-08-11), Mobile Competence Centre ; 650, route des Lucioles ; F-06921 Sophia-Antipolis Cedex ; France , XP051918473
- HUAWEI, HISILICON: "Extension of NBIFOM status parameter", 3GPP DRAFT; C1-154336_EXTENSION OF NBIFOM STATUS PARAMETER_24ABC, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. CT WG1, no. Anaheim (CA), USA; 20151116 - 20151120, 16 November 2015 (2015-11-16), Mobile Competence Centre ; 650, route des Lucioles ; F-06921 Sophia-Antipolis Cedex ; France , XP051039061

## Description

### Technical Field

The non-limiting and exemplary embodiments of the present disclosure generally relate to the technical field of communications, and specifically to methods and apparatuses for routing information retrieval.

### BACKGROUND

This section introduces aspects that may facilitate a better understanding of the disclosure. Accordingly, the statements of this section are to be read in this light and are not to be understood as admissions about what is in the prior art or what is not in the prior art.

In communication networks for example LTE (Long Term Evolution) and NR (new radio) as defined by 3rd Generation Partnership Project (3GPP), there may be various registration information stored in various network entities. A network entity or network function (NF) may retrieve a type of registration information from another network entity or network function which may have stored the registration information.

For example, a registration service operation may be invoked by a NF that has been selected to provide a service to a user equipment (UE) to store related UE Context Management (UECM) information in UDM (Unified Data Management). The NF Consumers may be AMF (Access and mobility Function) for access and mobility management service, SMF (Session Management Function) for session management services, SMSF (Short Message Service Function) providing SMS (Short Message Service) services and HSS (home subscriber server) for IP-SM-GW (Internet protocol-Short Message-Gateway) registration in SMSoIP (SMS over IP) scenarios. As part of this registration procedure, the UDM may authorize or reject the subscriber to use the service provided by the registered NF, based on subscription data (e.g. roaming restrictions).

ERICSSON: "Definition of missing error conditions in SMSF registration information retrieval", 3GPP DRAFT; CP-202111, proposes, when a consumer NF retrieves SMSF registration information from the UDM, a definition of new application errors in the Nudm_UECM_Get response indicating error conditions such as SMS teleservice not provisioned, and SMS barred according to 5GS subscription data.

"3rd Generation Partnership Project; Technical Specification Group Core Network and Terminals; 5G System; Unified Data Management Services; Stage 3 (Release 16)", 3GPP STANDARD; TECHNICAL SPECIFICATION; 3GPP TS 29.503, 3RD GENERATION PARTNERSHIP PROJECT (3GPP), MOBILE COMPETENCE CENTRE; 650, ROUTE DES LUCIOLES; F-06921, vol. CT WG4, no. V16.5.0 25 September 2020 (2020-09-25), specifies the stage 3 protocol and data model for the Nudm Service Based Interface. It provides stage 3 protocol definitions and message flows, and specifies the API for each service offered by the UDM.

3GPP TS 29.503 V17.1.0 has described various registration service operations such as
- AMF registration for 3GPP access
- AMF registration for non-3GPP access
- SMF registration
- SMSF registration for 3GPP access
- SMSF registration for non-3GPP access
- IP-SM-GW registration

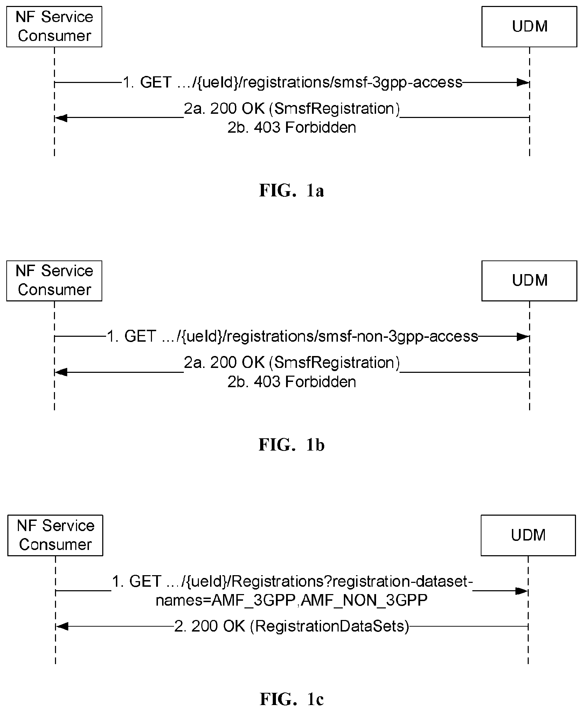

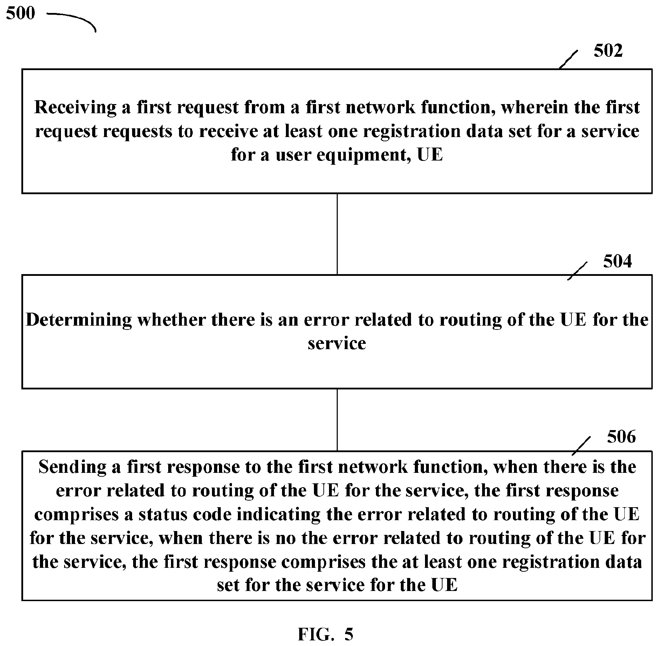

FIG.1a shows a procedure of requesting a UE's SMSF Registration Information for 3GPP Access. FIG.1 is same as the Figure 5.3.2.5.5-1 of 3GPP TS 29.503 V17.1.0.

FIG.1a shows a scenario where the NF service consumer (e.g. NEF (Network Exposure Function)) sends a request to the UDM to retrieve the UE's SmsfRegistration Information. The request contains the UE's identity (/{ueId}) which shall be a GPSI (Generic Public Subscription Identifier), the type of the requested information (/registrations/smsf-3gpp-access) and query parameters (supported-features).

At step 1. The NF service consumer (e.g. NEF) sends a GET request to the resource representing the UE's SMSF registration information for 3GPP access, with query parameters indicating the supported-features.

At step 2a. The UDM responds with "200 OK" with the message body containing the UE's SmsfRegistration for 3GPP access.

At step 2b. If the UE does not have required subscription data for SMS service or SMS service is barred, HTTP (HyperText Transfer Protocol) status code "403 Forbidden" should be returned including additional error information in the response body (in "ProblemDetails" element).

On failure, the appropriate HTTP status code indicating the error shall be returned and appropriate additional error information should be returned in the GET response body.

FIG.1b shows a procedure of requesting a UE's SMSF Registration Information for Non-3GPP Access. FIG.1b is same as the Figure 5.3.2.5.6-1 of 3GPP TS 29.503 V17.1.0.

FIG.1b shows a scenario where the NF service consumer (e.g. NEF) sends a request to the UDM to retrieve the UE's SmsfRegistration Information for non-3GPPP access. The request contains the UE's identity (/{ueId}) which shall be a GPSI, the type of the requested information (/registrations/smsf-non-3gpp-access) and query parameters (supported-features).

At step 1. The NF service consumer (e.g. NEF) sends a GET request to the resource representing the UE's SMSF registration information for non-3GPP access, with query parameters indicating the supported-features.

At step 2a. The UDM responds with "200 OK" with the message body containing the UE's SmsfRegistration for non-3GPP access.

At step 2b. If the UE does not have required subscription data for SMS service or SMS service is barred, HTTP status code "403 Forbidden" should be returned including additional error information in the response body (in "ProblemDetails" element).

On failure, the appropriate HTTP status code indicating the error shall be returned and appropriate additional error information should be returned in the GET response body.

FIG.1c shows a procedure of Retrieval of Multiple UE Registration Data Sets. FIG.1c is same as the Figure 5.3.2.5.10-1 of 3GPP TS 29.503 V17.1.0.

FIG.1c shows a scenario where the NF service consumer (e.g. HSS, NWDAF (network data analytics function), NSSAAF (Network Slice-Specific Authentication and Authorization Function)) sends a request to the UDM to receive multiple UE registration data sets. In this example scenario the UE's AMF registration data sets are retrieved with a single request; see clause 6.2.6.3.6 of 3GPP TS 29.503 V17.1.0 for other data sets that can be retrieved with a single request. The request contains the resource of UE's registrations({ueId}/registrations) and query parameters identifying the requested registration data sets (in this example: ?registration-dataset-names=AMF_3GPP, AMF_NON_3GPP).

At step 1. The NF Service Consumer (e.g. HSS, NWDAF) sends a GET request to the resource representing the UE registrations. Query parameters indicate the requested UE registration data sets.

At step 2. The UDM responds with "200 OK" with the message body containing the requested UE registration data sets.

On failure, the appropriate HTTP status code indicating the error shall be returned and appropriate additional error information should be returned in the GET response body.

Clause 6.2.3.6.3.3 of 3GPP TS 29.503 V17.1.0 describes GET method. This GET method shall support the URI (Uniform Resource Identifier) query parameters specified in table 1 which is same as table 6.2.3.6.3.3-1 of 3GPP TS 29.503 V17.1.0.

**Table 1: URI query parameters supported by the GET method on this resource**

| **Name** | **Data type** | **P** | **Cardinality** | **Description** |
|---|---|---|---|---|
| supported-features | Supported Features | O | 0.1 | see 3GPP TS 29.500 [4] clause 6.6 |

The GET method shall support the request data structures specified in table 2 which is same as table 6.2.3.6.3.3-2 of 3GPP TS 29.503 V17.1.0 and the response data structures and response codes specified in table 3 which is same as table 6.2.3.6.3.3-3 of 3GPP TS 29.503 V17.1.0.

**Table 2: Data structures supported by the GET Request Body on this resource**

| **Data type** | **P** | **Cardinality** | **Description** |
|---|---|---|---|
| n/a | | | |

**Table 3: Data structures supported by the GET Response Body on this resource**

| **Data type** | **P** | **Cardinality** | **Response codes** | **Description** |
|---|---|---|---|---|
| SmsfRegistration | M | 1 | 200 OK | Upon success, a response body containing the SmsfRegistration shall be returned. |
| ProblemDetails | O | 0.1 | 404 Not Found | The "cause" attribute may be used to indicate one of the following application errors: |
| | | | | - CONTEXT_NOT_FOUND |
| | | | | - USER_NOT_FOUND |
| NOTE: In addition common data structures as listed in table 5.2.7.1-1 of 3GPP TS 29.500 [4] are supported. | | | | |

Clause 6.2.3.7.3.3 of 3GPP TS 29.503 V17.1.0 describes GET method.

The GET method shall support the URI query parameters specified in table 4 which is same as table 6.2.3.7.3.3-1 of 3GPP TS 29.503 V17.1.0.

**Table 4: URI query parameters supported by the GET method on this resource**

| **Name** | **Data type** | **P** | **Cardinality** | **Description** |
|---|---|---|---|---|
| supported-features | Supported Features | O | 0.1 | see 3GPP TS 29.500 [4] clause 6.6 |

The GET method shall support the request data structures specified in table 5 which is same as table 6.2.3.7.3.3-2 of 3GPP TS 29.503 V17.1.0 and the response data structures and response codes specified in table 6 which is same as table 6.2.3.7.3.3-3 of 3GPP TS 29.503 V17.1.0.

**Table 5: Data structures supported by the GET Request Body on this resource**

| **Data type** | **P** | **Cardinality** | **Description** |
|---|---|---|---|
| n/a | | | |

**Table 6: Data structures supported by the GET Response Body on this resource**

| **Data type** | **P** | **Cardinality** | **Response codes** | **Description** |
|---|---|---|---|---|
| SmsfRegistration | M | 1 | 200 OK | Upon success, a response body containing the SmsfRegistration shall be returned. |
| ProblemDetails | O | 0.1 | 404 Not Found | The "cause" attribute may be used to indicate one of the following application errors: |
| | | | | - CONTEXT_NOT_FOUND |
| | | | | - USER_NOT_FOUND |
| NOTE: In addition common data structures as listed in table 5.2.7.1-1 of 3GPP TS 29.500 [4] are supported. | | | | |

### SUMMARY

This summary is provided to introduce a selection of concepts in a simplified form that are further described below in the detailed description. This summary is not intended to identify key features or essential features of the claimed subject matter, nor is it intended to be used to limit the scope of the claimed subject matter.

There are use cases for a network device/function such as SMS-GMSC(Short Message Service-Gateway Mobile Switching Centre)/IP-SM-GW/SMS-router or NEF to get routing of the UE for the service (e.g., SMS routing information for a UE registered in 5G (fifth generation) system), this request is supposed to be served by the 3GPP defined service such as Nudm UECM (UE Context Management) GET services as described in 3GPP TS 29.503 V17.1.0.

But an obvious problem is that for UE not reachable for the service such as SMS, the situation is not indicated by the prior art Nudm UECM GET service to the service consumer, and neither information regarding a subservice of the service (such as MT (mobile terminated)-SMS) is barred or information regarding the subservice of the service such as MT-SMS is not provisioned is indicated by the prior art Nudm UECM GET service to the service consumer.

For example, a NF service consumer such as NEF can retrieve information regarding SMSF as 5G domain SMS routing information by UECM GET SMSF for 3GPP access or by UECM GET SMSF for non-3GPP access or by UECM GET registration data sets for both SMSF for 3GPP access and SMSF for non-3GPP access. But the above service operations are not specified to return the correct conditions in the cause attribute based on the result of SMS subscription check and/or SMS waiting status check.

To overcome or mitigate at least one above mentioned problems or other problems, the embodiments of the present disclosure propose an improved routing information retrieval solution**.** The invention is defined in the independent claims 1, 6, 12, 13, 14 and 15.

In a first aspect of the disclosure, there is provided a method performed by a first network function. The method comprises sending a first request to a second network function, wherein the first request requests to receive at least one registration data set for a service for a user equipment (UE). The method further comprises receiving a first response from the second network function. When there is an error related to routing of the UE for the service, the first response comprises a status code indicating the error related to routing of the UE for the service. When there is no the error related to routing of the UE for the service, the first response comprises the at least one registration data set for the service for the UE.

In an embodiment, the status code indicating an error related to routing of the UE for the service comprises at least one of 403 Forbidden of HyperText Transfer Protocol (HTTP) status code with a cause attribute used to indicate the error related to routing of the UE for the service; or 404 Not Found of HTTP status code with a cause attribute used to indicate the error related to routing of the UE for the service.

In an embodiment, the error related to routing of the UE for the service comprises at least one of the UE has subscribed the service but a subservice of the service is barred; the UE has subscribed the service but a subservice of the service is not provisioned; or the UE has subscribed the service but the UE is not reachable for the service.

In an embodiment, the subservice of the service comprises at least one of mobile terminated service, or mobile originated service.

In an embodiment, the service comprises short message service.

In an embodiment, the at least one registration data set for the service for the UE comprises at least one of the UE's Short Message Service Function, SMSF, registration information for third Generation Partnership Project (3GPP) access; or the UE's SMSF registration information for non-3GPP access.

In an embodiment, the method further comprises: when the error related to routing of the UE for the service indicates that the UE has subscribed the service but the UE is not reachable for the service, sending a second request to the second network function. The second request requests to alert a function of the service when the UE is reachable for the service.

In an embodiment, the first network function comprises at least one of Short Message Service-Gateway Mobile Switching Centre (SMS-GMSC), Internet protocol-Short Message-Gateway (IP-SM-GW), SMS-router, Service Capability Exposure Function (SCEF), or Network Exposure Function (NEF).

In an embodiment, the second network function comprises at least one of unified data management (UDM), home subscriber server (HSS), or home location register (HLR).

In an embodiment, the first request is an HTTP GET request and the first response is an HTTP GET response.

In a second aspect of the disclosure, there is provided a method performed by a second network function. The method comprises receiving a first request from a first network function, wherein the first request requests to receive at least one registration data set for a service for a user equipment (UE). The method further comprises determining whether there is an error related to routing of the UE for the service. The method further comprises sending a first response to the first network function. When there is the error related to routing of the UE for the service, the first response comprises a status code indicating the error related to routing of the UE for the service. When there is no the error related to routing of the UE for the service, the first response comprises the at least one registration data set for the service for the UE.

In an embodiment, the method further comprises, when the error related to routing of the UE for the service indicates that the UE has subscribed the service but the UE is not reachable for the service, receiving a second request from the first network function. The second request requests to alert a function of the service when the UE is reachable for the service. The method further comprises sending an alerting message indicating that the UE is reachable for the service to the function of the service.

In an embodiment, determining whether there is an error related to routing of the UE for the service comprises: obtaining subscription data of the service of the UE, wherein the subscription data of the service of the UE comprises subscription information regarding whether the UE has subscribed the service; obtaining management subscription data of the service of the UE, wherein the management subscription data of the service of the UE comprises subscription information regarding whether the UE has subscribed a subservice of the service and/or a barring control policy; and determining whether there is an error related to routing of the UE for the service based on the subscription data of the service of the UE and the management subscription data of the service of the UE.

In an embodiment, at least one of the subscription data of the service of the UE and the management subscription data of the service of the UE is obtained from Unified Data Repository, UDR.

In an embodiment, determining whether there is an error related to routing of the UE for the service comprises: obtaining registration data of a function of the service for the UE; obtaining waiting status data of the service for the UE, wherein the waiting status data of the service for the UE comprises information regarding whether the UE is reachable for the service; and determining whether there is an error related to routing of the UE for the service based on the registration data of the function of the service for the UE and the waiting status data of the service for the UE.

In an embodiment, at least one of the registration data of the function of the service for the UE and the waiting status data of the service for the UE is obtained from UDR.

In a third aspect of the disclosure, there is provided a method a first network function. The first network function comprises a processor and a memory coupled to the processors. Said memory contains instructions executable by said processor. Said first network function is operative to send a first request to a second network function. The first request requests to receive at least one registration data set for a service for a user equipment (UE). Said first network function is further operative to receive a first response from the second network function. When there is an error related to routing of the UE for the service, the first response comprises a status code indicating the error related to routing of the UE for the service. When there is no the error related to routing of the UE for the service, the first response comprises the at least one registration data set for the service for the UE.

In a fourth aspect of the disclosure, there is provided a second network function. The second network function comprises a processor and a memory coupled to the processor. Said memory contains instructions executable by said processor. Said second network function is operative to receive a first request from a first network function. The first request requests to receive at least one registration data set for a service for a user equipment (UE). Said second network function is further operative to determining whether there is an error related to routing of the UE for the service. Said second network function is further operative to send a first response to the first network function. When there is the error related to routing of the UE for the service, the first response comprises a status code indicating the error related to routing of the UE for the service. When there is no the error related to routing of the UE for the service, the first response comprises the at least one registration data set for the service for the UE.

In a fifth aspect of the disclosure, there is provided a first network function. The first network function comprises a first sending module and a receiving module. The first sending module may be configured to send a first request to a second network function. The first request requests to receive at least one registration data set for a service for a user equipment (UE). The receiving module may be configured to receive a first response from the second network function. When there is an error related to routing of the UE for the service, the first response comprises a status code indicating the error related to routing of the UE for the service. When there is no the error related to routing of the UE for the service, the first response comprises the at least one registration data set for the service for the UE.

In an embodiment, the first network function may further comprise a second sending module configured to, when the error related to routing of the UE for the service indicates that the UE has subscribed the service but the UE is not reachable for the service, send a second request to the second network function. The second request requests to alert a function of the service when the UE is reachable for the service.

In a sixth aspect of the disclosure, there is provided a second network function. The second network function comprises a first receiving module, a determining module and a first sending module. The first receiving module may be configured to receive a first request from a first network function. The first request requests to receive at least one registration data set for a service for a user equipment (UE). The determining module may be configured to determine whether there is an error related to routing of the UE for the service. The first sending module 1203 may be configured to send a first response to the first network function. When there is an error related to routing of the UE for the service, the first response comprises a status code indicating the error related to routing of the UE for the service. When there is no the error related to routing of the UE for the service, the first response comprises the at least one registration data set for the service for the UE

In an embodiment, the second network function may further comprise a second receiving module configured to, when the error related to routing of the UE for the service indicates that the UE has subscribed the service but the UE is not reachable for the service, receive a second request from the first network function. The second request requests to alert a function of the service when the UE is reachable for the service.

In an embodiment, the second network function may further comprise a second sending module configured to send an alerting message indicating that the UE is reachable for the service to the function of the service.

In a seventh aspect of the disclosure, there is provided a computer program product comprising instructions which when executed by at least one processor, cause the at least one processor to perform the method according to any one of the first and second aspects.

In an eighth aspect of the disclosure, there is provided a computer-readable storage medium storing instructions which when executed by at least one processor, cause the at least one processor to perform the method according to any one of the first and second aspects.

Embodiments herein may provide many advantages, of which a non-exhaustive list of examples follows. In some embodiments herein, the second network fucntion can send a correct status code indicating the error related to routing of the UE for the service to the first network fucntion. For example, a correct cause may be sent to the consumer of UDM UECM GET service for SMS routing information requests, such as ABSENT_SUBSCRIBER_SM, MTSMS_BARRED, MTSMS_NOT_PROVISIONED etc. In some embodiments herein, the NF consumer can differentiate the error conditions. In some embodiments herein, the propose solution can avoid unnecessary signaling for example when the UE is not reachable for the service such as SMS. In some embodiments herein, the first network function can request the second network function to alert a function of the service when the UE is reachable for the service. For example, the service consumer could ask UDM to add SC address into SMS waiting data list. Once the UE is reachable for SMS, UDM could alert the SC for retransmitting of the pending SMS. In some embodiments herein, the service such as SMS delivery can be optimized. The embodiments herein are not limited to the features and advantages mentioned above. A person skilled in the art will recognize additional features and advantages upon reading the following detailed description.

### BRIEF DESCRIPTION OF THE DRAWINGS

The above and other aspects, features, and benefits of various embodiments of the present disclosure will become more fully apparent, by way of example, from the following detailed description with reference to the accompanying drawings, in which like reference numerals or letters are used to designate like or equivalent elements. The drawings are illustrated for facilitating better understanding of the embodiments of the disclosure and not necessarily drawn to scale, in which:
FIG.1a shows a procedure of requesting a UE's SMSF Registration Information for 3GPP Access;
FIG.1b shows a procedure of requesting a UE's SMSF Registration Information for Non-3GPP Access;
FIG.1c shows a procedure of Retrieval of Multiple UE Registration Data Sets;
FIG.2 schematically shows a high level architecture in a 5G network according to an embodiment of the present disclosure;
FIG.3 schematically shows a system architecture in a 4G network according to an embodiment of the present disclosure;
FIG.4 shows a flowchart of a method according to an embodiment of the present disclosure;
FIG.5 shows a flowchart of a method according to another embodiment of the present disclosure;
FIG.6 shows a flowchart of a method according to another embodiment of the present disclosure;
FIG.7 shows a flowchart of retrieval of SMSF registration data for 3GPP access according to an embodiment of the present disclosure;
FIG. 8 shows a flowchart of retrieval of SMSF registration data for non-3GPP access according to an embodiment of the present disclosure;
FIG.9 shows a flowchart of retrieval of SMSF registration data for non-3GPP access and SMSF registration data for 3GPP access according to an embodiment of the present disclosure;
FIG.10 is a block diagram showing an apparatus suitable for practicing some embodiments of the disclosure;
FIG.11 is a block diagram showing a first network function according to an embodiment of the disclosure; and
FIG.12 is a block diagram showing a second network function according to an embodiment of the disclosure.

### DETAILED DESCRIPTION

The embodiments of the present disclosure are described in detail with reference to the accompanying drawings. It should be understood that these embodiments are discussed only for the purpose of enabling those skilled persons in the art to better understand and thus implement the present disclosure, rather than suggesting any limitations on the scope of the present disclosure. Reference throughout this specification to features, advantages, or similar language does not imply that all of the features and advantages that may be realized with the present disclosure should be or are in any single embodiment of the disclosure. Rather, language referring to the features and advantages is understood to mean that a specific feature, advantage, or characteristic described in connection with an embodiment is included in at least one embodiment of the present disclosure. Furthermore, the described features, advantages, and characteristics of the disclosure may be combined in any suitable manner in one or more embodiments. One skilled in the relevant art will recognize that the disclosure may be practiced without one or more of the specific features or advantages of a particular embodiment. In other instances, additional features and advantages may be recognized in certain embodiments that may not be present in all embodiments of the disclosure.

As used herein, the term "network" refers to a network following any suitable communication standards such as new radio (NR), long term evolution (LTE), LTE-Advanced, wideband code division multiple access (WCDMA), high-speed packet access (HSPA), Code Division Multiple Access (CDMA), Time Division Multiple Address (TDMA), Frequency Division Multiple Access (FDMA), Orthogonal Frequency-Division Multiple Access (OFDMA), Single carrier frequency division multiple access (SC-FDMA) and other wireless networks. A CDMA network may implement a radio technology such as Universal Terrestrial Radio Access (UTRA), etc. UTRA includes WCDMA and other variants of CDMA. A TDMA network may implement a radio technology such as Global System for Mobile Communications (GSM). An OFDMA network may implement a radio technology such as Evolved UTRA (E-UTRA), Ultra Mobile Broadband (UMB), IEEE 802.11 (Wi-Fi), IEEE 802.16 (WiMAX), IEEE 802.20, Flash-OFDMA, Ad-hoc network, wireless sensor network, etc. In the following description, the terms "network" and "system" can be used interchangeably. Furthermore, the communications between two devices in the network may be performed according to any suitable communication protocols, including, but not limited to, the communication protocols as defined by a standard organization such as 3GPP. For example, the communication protocols may comprise the first generation (1G), 2G, 3G, 4G, 4.5G, 5G communication protocols, and/or any other protocols either currently known or to be developed in the future.

The term "network function (NF)" refers to any suitable network function (NF) which can be implemented in a network entity (physical or virtual) of a communication network. For example, the network function can be implemented either as a network element on a dedicated hardware, as a software instance running on a dedicated hardware, or as a virtualized function instantiated on an appropriate platform, e.g. on a cloud infrastructure. For example, the 5G system (5GS) may comprise a plurality of NFs such as AMF (Access and mobility Function), SMF (Session Management Function), AUSF (Authentication Service Function), UDM (Unified Data Management), PCF (Policy Control Function), AF (Application Function), NEF (Network Exposure Function), UPF (User plane Function) and NRF (Network Repository Function), RAN (radio access network), SCP (service communication proxy), NWDAF (network data analytics function), NSSF (Network Slice Selection Function), NSSAAF (Network Slice-Specific Authentication and Authorization Function), etc. For example, the 4G system (such as LTE) may include a plurality of NFs such as MME (Mobile Management Entity), HSS (home subscriber server), Policy and Charging Rules Function (PCRF), Packet Data Network Gateway (PGW), PGW control plane (PGW-C), Serving gateway (SGW), SGW control plane (SGW-C), E-UTRAN Node B (eNB),etc. In other embodiments, the network function may comprise different types of NFs for example depending on a specific network.

The term "terminal device" refers to any end device that can access a communication network and receive services therefrom. By way of example and not limitation, the terminal device refers to a mobile terminal, user equipment (UE), or other suitable devices. The UE may be, for example, a Subscriber Station (SS), a Portable Subscriber Station, a Mobile Station (MS), or an Access Terminal (AT). The terminal device may include, but not limited to, a portable computer, an image capture terminal device such as a digital camera, a gaming terminal device, a music storage and a playback appliance, a mobile phone, a cellular phone, a smart phone, a voice over IP (VoIP) phone, a wireless local loop phone, a tablet, a wearable device, a personal digital assistant (PDA), a portable computer, a desktop computer, a wearable terminal device, a vehicle-mounted wireless terminal device, a wireless endpoint, a mobile station, a laptop-embedded equipment (LEE), a laptop-mounted equipment (LME), a USB dongle, a smart device, a wireless customer-premises equipment (CPE) and the like. In the following description, the terms "terminal device", "terminal", "user equipment" and "UE" may be used interchangeably. As one example, a terminal device may represent a UE configured for communication in accordance with one or more communication standards promulgated by the 3GPP (3rd Generation Partnership Project), such as 3GPP' LTE standard or NR standard. As used herein, a "user equipment" or "UE" may not necessarily have a "user" in the sense of a human user who owns and/or operates the relevant device. In some embodiments, a terminal device may be configured to transmit and/or receive information without direct human interaction. For instance, a terminal device may be designed to transmit information to a network on a predetermined schedule, when triggered by an internal or external event, or in response to requests from the communication network. Instead, a UE may represent a device that is intended for sale to, or operation by, a human user but that may not initially be associated with a specific human user.

As yet another example, in an Internet of Things (IoT) scenario, a terminal device may represent a machine or other device that performs monitoring and/or measurements, and transmits the results of such monitoring and/or measurements to another terminal device and/or network equipment. The terminal device may in this case be a machine-to-machine (M2M) device, which may in a 3GPP context be referred to as a machine-type communication (MTC) device. As one particular example, the terminal device may be a UE implementing the 3GPP narrow band internet of things (NB-IoT) standard. Particular examples of such machines or devices are sensors, metering devices such as power meters, industrial machinery, or home or personal appliances, for example refrigerators, televisions, personal wearables such as watches etc. In other scenarios, a terminal device may represent a vehicle or other equipment that is capable of monitoring and/or reporting on its operational status or other functions associated with its operation.

References in the specification to "one embodiment," "an embodiment," "an example embodiment," and the like indicate that the embodiment described may include a particular feature, structure, or characteristic, but it is not necessary that every embodiment includes the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

It shall be understood that although the terms "first" and "second" etc. may be used herein to describe various elements, these elements should not be limited by these terms. These terms are only used to distinguish one element from another. For example, a first element could be termed a second element, and similarly, a second element could be termed a first element, without departing from the scope of example embodiments. As used herein, the term "and/or" includes any and all combinations of one or more of the associated listed terms.

As used herein, the phrase "at least one of A and B" or "at least one of A or B" should be understood to mean "only A, only B, or both A and B." The phrase "A and/or B" should be understood to mean "only A, only B, or both A and B".

The terminology used herein is for the purpose of describing particular embodiments only and is not intended to be limiting of example embodiments. As used herein, the singular forms "a", "an" and "the" are intended to include the plural forms as well, unless the context clearly indicates otherwise. It will be further understood that the terms "comprises", "comprising", "has", "having", "includes" and/or "including", when used herein, specify the presence of stated features, elements, and/or components etc., but do not preclude the presence or addition of one or more other features, elements, components and/ or combinations thereof.

It is noted that these terms as used in this document are used only for ease of description and differentiation among nodes, devices or networks etc. With the development of the technology, other terms with the similar/same meanings may also be used.

In the following description and claims, unless defined otherwise, all technical and scientific terms used herein have the same meaning as commonly understood by one of ordinary skills in the art to which this disclosure belongs.

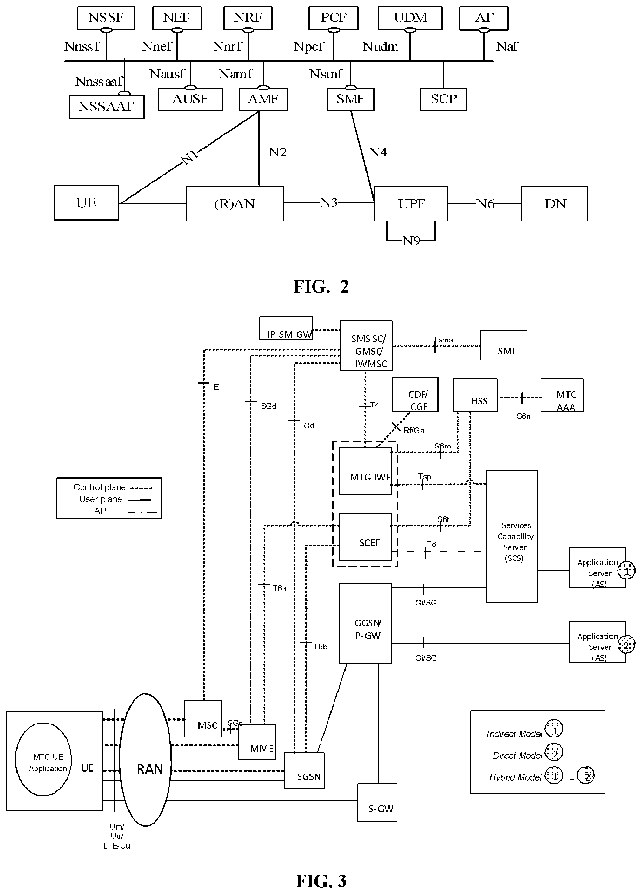

Although the subject matter described herein may be implemented in any appropriate type of system using any suitable components, the embodiments disclosed herein are described in relation to a communication system complied with the exemplary system architectures illustrated in FIGs.2-3. For simplicity, the system architectures of FIGs. 2-3 only depict some exemplary elements. In practice, a communication system may further include any additional elements suitable to support communication between terminal devices or between a wireless device and another communication device, such as a landline telephone, a service provider, or any other network node or terminal device. The communication system may provide communication and various types of services to one or more terminal devices to facilitate the terminal devices' access to and/or use of the services provided by, or via, the communication system.

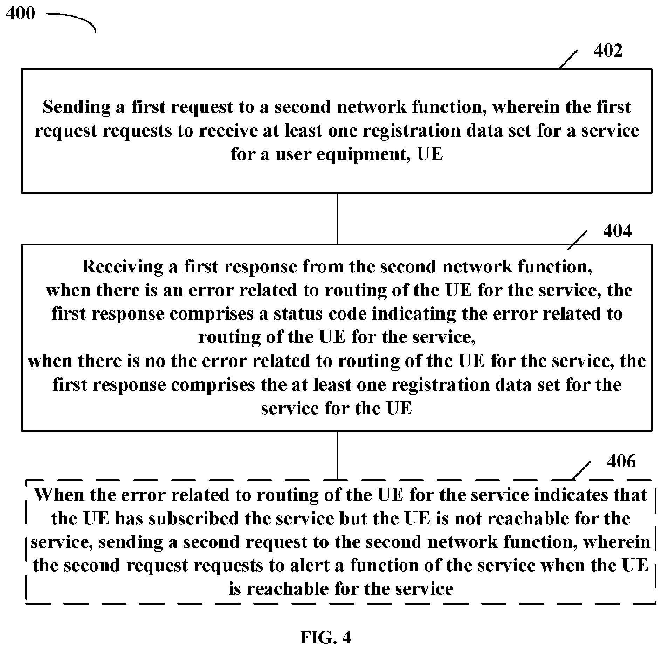

FIG.2 schematically shows a high level architecture in the fifth generation network according to an embodiment of the present disclosure. For example, the fifth generation network may be 5GS. The architecture of FIG.2 is same as Figure 4.2.3-1 as described in 3GPP TS 23.501 V16.5.1. The system architecture of FIG.2 may comprise some exemplary elements such as AUSF, AMF, DN (data network), NEF, NRF, NSSF, PCF, SMF, UDM, UPF, AF, UE, (R)AN, SCP (Service Communication Proxy), NSSAAF (Network Slice-Specific Authentication and Authorization Function), etc.

In accordance with an exemplary embodiment, the UE can establish a signaling connection with the AMF over the reference point N1, as illustrated in FIG.2. This signaling connection may enable NAS (Non-access stratum) signaling exchange between the UE and the core network, comprising a signaling connection between the UE and the (R)AN and the N2 connection for this UE between the (R)AN and the AMF. The (R)AN can communicate with the UPF over the reference point N3. The UE can establish a protocol data unit (PDU) session to the DN (data network, e.g. an operator network or Internet) through the UPF over the reference point N6.

As further illustrated in FIG.2, the exemplary system architecture also contains the service-based interfaces such as Nnrf, Nnef, Nausf, Nudm, Npcf, Namf and Nsmf exhibited by NFs such as the NRF, the NEF, the AUSF, the UDM, the PCF, the AMF and the SMF. In addition, FIG.2 also shows some reference points such as N1, N2, N3, N4, N6 and N9, which can support the interactions between NF services in the NFs. For example, these reference points may be realized through corresponding NF service-based interfaces and by specifying some NF service consumers and providers as well as their interactions in order to perform a particular system procedure.

Various NFs shown in FIG.2 may be responsible for functions such as session management, mobility management, authentication, security, etc. The AUSF, AMF, DN, NEF, NRF, NSSF, PCF, SMF, UDM, UPF, AF, UE, (R)AN, SCP may include the functionality for example as defined in clause 6.2 of 3GPP TS23.501 V16.5.1.

FIG.3 schematically shows a system architecture in a 4G network according to an embodiment of the present disclosure, which is the same as Figure 4.2-1a of 3GPP TS 23.682 V16.8.0. The system architecture of FIG.3 may comprise some exemplary elements such as Services Capability Server (SCS), Application Server (AS), SCEF(Service Capability Exposure Function), HSS, UE, RAN(Radio Access Network), SGSN (Serving GPRS(General Packet Radio Service) Support Node), MME, MSC(Mobile Switching Centre), S-GW(Serving Gateway), GGSN/P-GW(Gateway GPRS Support Node/PDN(Packet Data Network) Gateway), MTC-IWF(Machine Type Communications-InterWorking Function) CDF/CGF(Charging Data Function/Charging Gateway Function), MTC-AAA(Machine Type Communications-authentication, authorization and accounting), SMS-SC/GMSC/IWMSC(Short Message Service-Service Centre/Gateway MSC/InterWorking MSC) IP-SM-GW(Internet protocol Short Message Gateway). The network elements and interfaces as shown in FIG.3 may be same as the corresponding network elements and interfaces as described in 3GPP TS 23.682 V16.8.0.

FIG.4 shows a flowchart of a method according to an embodiment of the present disclosure, which may be performed by an apparatus implemented in or at or as a first network function or communicatively coupled to the first network function. As such, the apparatus may provide means or modules for accomplishing various parts of the method 400 as well as means or modules for accomplishing other processes in conjunction with other components.

At block 402, the first network function may send a first request to a second network function. The first request requests to receive at least one registration data set for a service for a user equipment (UE).

The first network function may be any suitable NF which may request to receive at least one registration data set for a service for the UE from the second network function. For example, the first network function may comprise at least one of SMS-GMSC, IP-SM-GW, SMS-router, SCEF (Service Capability Exposure Function), AMF, SMF, SMSF, NEF, GMLC (Gateway Mobile Location Centre), NWDAF, HSS, HLR (home location register) and AUSF.

In an embodiment, the first network function may comprise at least one of SMS-GMSC, IP-SM-GW, SMS-router, SCEF or NEF.

The second network function may be any suitable NF which may can store the least one registration data set for the service for the UE or can retrieve it from another NF. For example, the second network function may comprise any suitable data management entity or data storage entity.

In an embodiment, the second network function may comprise at least one of unified data management (UDM), home subscriber server (HSS), or home location register (HLR).

The second NF may offer various services to the first NF. For example, the second NF may offer at least one of subscriber data management service, UE context management service, UE authentication service, event exposure service, parameter provision service, etc.

At block 404, the first network function may receive a first response from the second network function.

In an embodiment, when there is an error related to routing of the UE for the service, the first response comprises a status code indicating the error related to routing of the UE for the service. When the first NF receives the status code from the second NF, the first NF may know that the second NF has obtained the at least one registration data set for the service for the UE but there is the error related to routing of the UE for the service. In other words, the first NF knows that the UE is not reachable for the service such as SMS. Therefore the first NF may take any suitable action based on the knowledge of the status code.

In an embodiment, when there is no the error related to routing of the UE for the service, the first response comprises the at least one registration data set for the service for the UE. When the first NF receives the at least one registration data set for the service for the UE, the first NF may know that there is no the error related to routing of the UE for the service. In other words, the first NF knows that the UE is reachable for the service such as SMS. Therefore the first NF may take any suitable action based on the knowledge of the at least one registration data set for the service for the UE.

The error related to routing of the UE for the service may be determined by the second NF.

In other embodiments, when the second NF cannot obtain the at least one registration data set for the service for the UE (e.g., no corresponding context exists) or the UE is not found, the first response may comprise a status code indicating this error such as CONTEXT_NOT_FOUND or USER_NOT_FOUND.

The status code may be any suitable status code. In an embodiment, the status code indicating an error related to routing of the UE for the service comprises at least one of 403 Forbidden of HyperText Transfer Protocol (HTTP) status code with a cause attribute used to indicate the error related to routing of the UE for the service; or 404 Not Found of HTTP status code with a cause attribute used to indicate the error related to routing of the UE for the service.

The cause attribute used to indicate the error related to routing of the UE for the service may be any suitable cause attribute such as "ABSNET_SUBSCRIBER_SM" , "SUBSERVICE_BARRED", " SUBSERVICE _NOT_PROVISIONED". For example, when the service is SMS and the subservice is MT SMS, the cause attribute used to indicate the error related to routing of the UE for the service may be "ABSNET_SUBSCRIBER_SM", "MTSMS_BARRED", " MTSMS _NOT_PROVISIONED".

In an embodiment, the error related to routing of the UE for the service comprises at least one of: the UE has subscribed the service but a subservice of the service is barred; the UE has subscribed the service but a subservice of the service is not provisioned; or the UE has subscribed the service but the UE is not reachable for the service.

In an embodiment, the subservice of the service comprises at least one of mobile terminated service, or mobile originated service.

In an embodiment, the service comprises short message service.

In an embodiment, the at least one registration data set for the service for the UE comprises at least one of: the UE's Short Message Service Function (SMSF) registration information for third Generation Partnership Project 3(GPP) access; or the UE's SMSF registration information for non-3GPP access.

In an embodiment, the first request is an HTTP GET request and the first response is an HTTP GET response.

At block 406, optionally, when the error related to routing of the UE for the service indicates that the UE has subscribed the service but the UE is not reachable for the service, the first network function may send a second request to the second network function. The second request requests to alert a function of the service when the UE is reachable for the service. After receiving the alert message indicating that the UE is reachable for the service, the function of the service may perform any suitable action based on the alert, for example, retransmitting of the pending SMS.

FIG.5 shows a flowchart of a method according to another embodiment of the present disclosure, which may be performed by an apparatus implemented in or at or as a second network function or communicatively coupled to the second network function. As such, the apparatus may provide means or modules for accomplishing various parts of the method 500 as well as means or modules for accomplishing other processes in conjunction with other components. For some parts which have been described in the above embodiments, the description thereof is omitted here for brevity.

At block 502, the second network function may receive a first request from a first network function. The first request requests to receive at least one registration data set for a service for a user equipment (UE). For example, the first NF may send the first request to the second NF at block 402 of FIG.4, and then the second NF may receive the first request.

At block 504, the second network function may determine whether there is an error related to routing of the UE for the service. The second network function may determine whether there is an error related to routing of the UE for the service in various ways.

In an embodiment, the second network function may determine whether there is an error related to routing of the UE for the service by obtaining subscription data of the service of the UE, wherein the subscription data of the service of the UE comprises subscription information regarding whether the UE has subscribed the service; obtaining management subscription data of the service of the UE, wherein the management subscription data of the service of the UE comprises subscription information regarding whether the UE has subscribed a subservice of the service and/or a barring control policy; and determining whether there is an error related to routing of the UE for the service based on the subscription data of the service of the UE and the management subscription data of the service of the UE.

For example, the second network function may obtain the subscription data of the service of the UE. The subscription data of the service of the UE comprises subscription information regarding whether the UE has subscribed the service. The second network function may obtain subscription data of the service of the UE from its local storage when the subscription data of the service of the UE has been stored in its local storage. The second network function may obtain the subscription data of the service of the UE from another network function when the subscription data of the service of the UE has been stored in another network function.

The second network function may obtain the management subscription data of the service of the UE. The management subscription data of the service of the UE comprises subscription information regarding whether the UE has subscribed a subservice of the service and/or a barring control policy. The second network function may obtain the management subscription data of the service of the UE from its local storage when the management subscription data of the service of the UE has been stored in its local storage. The second network function may obtain the management subscription data of the service of the UE from another network function when the management subscription data of the service of the UE has been stored in another network function.

In an embodiment, at least one of the subscription data of the service of the UE and the management subscription data of the service of the UE may be obtained from Unified Data Repository (UDR).

The second NF may determine whether there is an error related to routing of the UE for the service based on the subscription data of the service of the UE and the management subscription data of the service of the UE. For example, when a barred condition of a subservice of the service is met, e.g., the UE has subscribed SMS and the MT-SMS is barred for a registered visiting PLMN or for all PLMNs, a HTTP 403 error response may be returned with CAUSE: MTSMS_BARRED indicated in the problem details of the HTTP 403 error response. If the subservice of the service is not provisioned, e.g., the UE has subscribed SMS and but MT-SMS is not provisioned, a HTTP 403 error response may be returned with CAUSE: MTSMS_NOT_PROVISIONED indicated in the problem details of the HTTP 403 error response.

In an embodiment, the second NF may determine whether there is an error related to routing of the UE for the service by obtaining registration data of a function of the service for the UE; obtaining waiting status data of the service for the UE, wherein the waiting status data of the service for the UE comprises information regarding whether the UE is reachable for the service; and determining whether there is an error related to routing of the UE for the service based on the registration data of the function of the service for the UE and the waiting status data of the service for the UE.

For example, the second network function may obtain the registration data of a function of the service for the UE. The second network function may obtain the registration data of a function of the service for the UE its local storage when the registration data of a function of the service for the UE has been stored in its local storage. The second network function may obtain the registration data of a function of the service for the UE from another network function when the registration data of a function of the service for the UE has been stored in another network function.

The second network function may obtain the waiting status data of the service for the UE. The waiting status data of the service for the UE comprises information regarding whether the UE is reachable for the service. The second network function may obtain the waiting status data of the service for the UE from its local storage when the waiting status data of the service for the UE has been stored in its local storage. The second network function may obtain the waiting status data of the service for the UE from another network function when the waiting status data of the service for the UE has been stored in another network function.

In an embodiment, at least one of the registration data of the function of the service for the UE and the waiting status data of the service for the UE is obtained from UDR.

The second NF may determine whether there is an error related to routing of the UE for the service based on the registration data of the function of the service for the UE and the waiting status data of the service for the UE. For example, if absent subscriber for SM (short message) condition is met, e.g., the UE has SMSF registered for 3GPP access and SMS waiting data status indicates that the UE is not reachable for SMS, a HTTP 404 error response is returned with CAUSE: ABSENT_SUBSCRIBER_SM indicated in the problem details of the HTTP 404 error response. Based on the new cause code ABSENT_SUBSCRIBER_SM, the NF service consumer (e.g., the first NF) may further ask UDM to add SC (service center) address into the SMS waiting data list. So once the UE is reachable for SMS, UDM could alert the SC for retransmitting of the pending SMS.

At block 506, the second network function may send a first response to the first network function.

In an embodiment, when there is the error related to routing of the UE for the service, the first response comprises a status code indicating the error related to routing of the UE for the service.

In an embodiment, when there is no the error related to routing of the UE for the service, the first response comprises the at least one registration data set for the service for the UE.

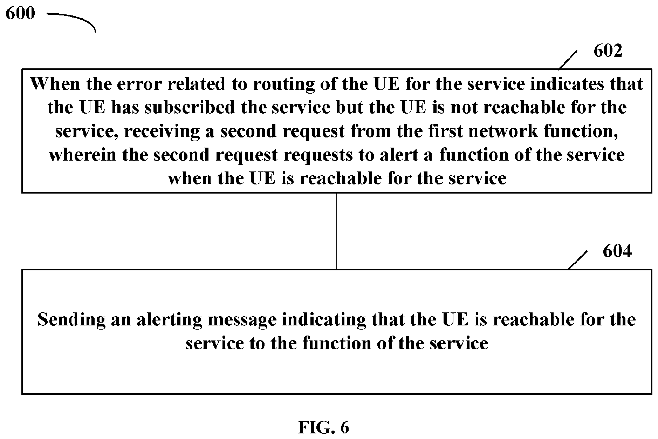

FIG.6 shows a flowchart of a method according to another embodiment of the present disclosure, which may be performed by an apparatus implemented in or at or as a second network function or communicatively coupled to the second network function. As such, the apparatus may provide means or modules for accomplishing various parts of the method 600 as well as means or modules for accomplishing other processes in conjunction with other components. For some parts which have been described in the above embodiments, the description thereof is omitted here for brevity.

At block 602, when the error related to routing of the UE for the service indicates that the UE has subscribed the service but the UE is not reachable for the service, the second network function may receive a second request from the first network function. The second request requests to alert a function of the service when the UE is reachable for the service.

At block 604, the second network function may send an alerting message indicating that the UE is reachable for the service to the function of the service. In an embodiment, the function of the service may comprise at least one of SMS-GMSC, IP-SM-GW, or SMS-router.

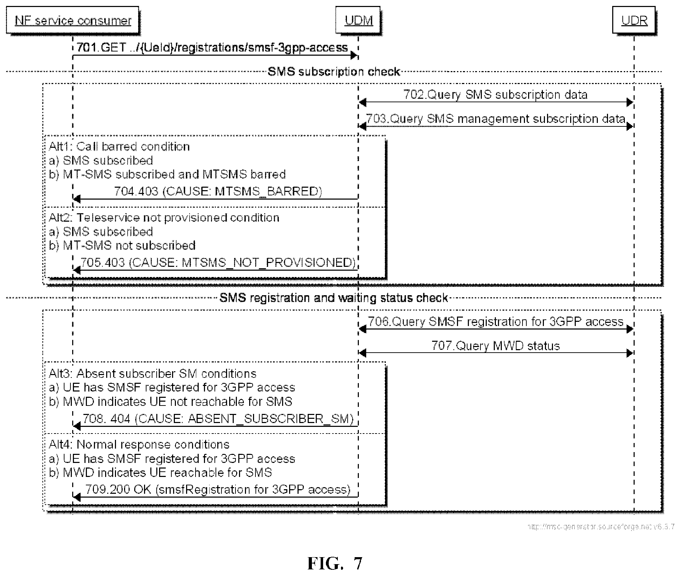

FIG.7 shows a flowchart of retrieval of SMSF registration data for 3GPP access according to an embodiment of the present disclosure.

At step 701, an NF service consumer such as NEF sends a GET request (such as HTTP GET) to the resource representing the UE's registration information for 3GPP access.

UDM firstly is enhanced with the SMS subscription check steps by getting the UE's SMS subscription data and SMS management subscription data from UDR in step 702 and step 703 correspondingly.

At step 702, UDM may query UDR to get the UE's SMS subscription data. In the SMS subscription data, it may comprise subscription on whether the UE (or the user of the UE) has subscribed SMS.

At step 703, UDM may query UDR to get the UE's SMS management subscription data. In the SMS management subscription data, it may comprise the UE's (or the user of the UE) subscription on MO-SMS and MT-SMS and barring control policy.

At step 704, if a call barred condition is met, e.g., the UE has subscribed SMS and the MT-SMS is barred for the registered visiting PLMN or for all PLMNs, a HTTP 403 error response is returned with CAUSE: MTSMS_BARRED indicated in the problemDetails of the HTTP 403 error response.

At step 705, if a teleservice not provisioned condition is met, e.g., the UE has subscribed SMS but MT-SMS is not provisioned, a HTTP 403 error response is returned with CAUSE: MTSMS_NOT_PROVISIONED indicated in the problemDetails of the HTTP 403 error response.

UDM secondly is enhanced with the SMS registration and waiting status check steps by getting the UE's SMSF registration data and SMS waiting status data from UDR in step 706 and step 707 correspondingly.

At step 706, UDM may query UDR to get the UE's SMSF registration data for 3GPP access.

At step 707, UDM may query UDR to get the UE's SMS waiting status data. In the SMS waiting status data, it may indicated whether UE is reachable for SMS.

At step 708, if an absent subscriber for SM condition is met, e.g., the UE has SMSF registered for 3GPP access and SMS waiting data status indicates that the UE is not reachable for SMS, a HTTP 404 error response is returned with CAUSE: ABSENT_SUBSCRIBER_SM indicated in the problemDetails of the HTTP 404 error response.

Based on new cause code ABSENT_SUBSCRIBER_SM, the NF service consumer may further ask UDM to add SC address into the SMS waiting data list. So once UE is reachable for SMS, UDM could alert the SC for retransmitting of the pending SMS.

At step 709, if a normal response condition is met, e.g., the UE has SMSF registered for 3GPP access and SMS waiting data status indicates that the UE is reachable for SMS, a HTTP 200 OK response is returned with SMSF registration data for 3GPP access.

The MTSMS_BARRED or MTSMS_NOT_PROVISIONED or ABSENT_SUBSCRIBER_SM cause code described above are not supported in the 3GPP protocol as described in 3GPP TS 29.503 V17.1.0, so the proposed embodiments can enhance the 3GPP protocol to indicate such condition to the NF service consumer.

In an embodiment, Table 6.2.3.6.3.3-3 of 3GPP TS 29.503 V17.1.0 may be amended as following:

**Table 6.2.3.6.3.3-3: Data structures supported by the GET Response Body on this resource**

| **Data type** | **P** | **Cardinality** | **Response codes** | **Description** |
|---|---|---|---|---|
| SmsfRegistration | M | 1 | 200 OK | Upon success, a response body containing the SmsfRegistration shall be returned. |
| ProblemDetails | O | 0.1 | 404 Not Found | The "cause" attribute may be used to indicate one of the following application errors: |
| | | | | - CONTEXT_NOT_FOUND |
| | | | | - USER_NOT_FOUND |
| | | | | - ABSENT SUBSCRIBER SM |
| ProblemDetails | O | 0.1 | 403 Forbidden | The "cause" attribute may be used to indicate one of the following application errors: |
| | | | | - MTSMS BARRED |
| | | | | - MTSMS NOT PROVISIONED |
| NOTE: In additio 3GPP TS n c 29. ommon data 500 [4] are su structures as pported. listed in table 5.2.7.1-1 of | | | | |

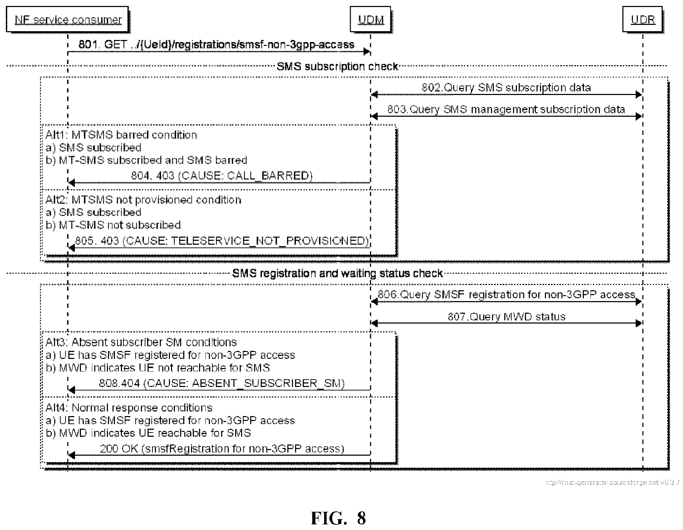

FIG. 8 shows a flowchart of retrieval of SMSF registration data for non-3GPP access according to an embodiment of the present disclosure.

At step 801, an NF service consumer such as NEF sends a GET request (such as HTTP GET) to the resource representing the UE's registration information for non-3GPP access.

UDM firstly is enhanced with the SMS subscription check steps by getting the UE's SMS subscription data and SMS management subscription data from UDR in step 802 and step 803 correspondingly.

At step 802, UDM may query UDR to get the UE's SMS subscription data. In the SMS subscription data, it may comprise subscription on whether the UE (or the user of the UE) has subscribed SMS.

At step 803, UDM may query UDR to get the UE's SMS management subscription data. In the SMS management subscription data, it may comprise the UE's (or the user of the UE) subscription on MO-SMS and MT-SMS and barring control policy.

At step 804, if a call barred condition is met, e.g., the UE has subscribed SMS and the MT-SMS is barred for the registered visiting PLMN or for all PLMNs, a HTTP 403 error response is returned with CAUSE: MTSMS_BARRED indicated in the problemDetails of the HTTP 403 error response.

At step 805, if a teleservice not provisioned condition is met, e.g., the UE has subscribed SMS but MT-SMS is not provisioned, a HTTP 403 error response is returned with CAUSE: MTSMS_NOT_PROVISIONED indicated in the problemDetails of the HTTP 403 error response.

UDM secondly is enhanced with the SMS registration and waiting status check steps by getting the UE's SMSF registration data and SMS waiting status data from UDR in step 806 and step 807 correspondingly.

At step 806, UDM query may UDR to get the UE's SMSF registration data for non-3GPP access

At step 807, UDM may query UDR to get the UE's SMS waiting status data. In the SMS waiting status data, it may indicated whether UE is reachable for SMS.

At step 808, if an absent subscriber for SM condition is met, e.g., the UE has SMSF registered for non-3GPP access and the SMS waiting data status indicates that the UE is not reachable for SMS, a HTTP 404 error response is returned with CAUSE: ABSENT_SUBSCRIBER_SM indicated in the problemDetails of the HTTP 404 error response.

Based on new cause code ABSENT_SUBSCRIBER_SM, the NF service consumer may further ask UDM to add SC address into the SMS waiting data list. So once UE is reachable for SMS, UDM could alert the SC for retransmitting of the pending SMS.

At step 809, if a normal response condition is met, e.g., the UE has SMSF registered for non-3GPP access and the SMS waiting data status indicated UE is reachable for SMS, a HTTP 200 OK response is returned with SMSF registration data for non-3GPP access

The MTSMS_BARRED or MTSMS_NOT_PROVISIONED or ABSENT_SUBSCRIBER_SM cause code described above are not supported in the 3GPP protocol as described in 3GPP TS 29.503 V17.1.0, so the proposed embodiments can enhance the 3GPP protocol to indicate such condition to the NF service consumer.

In an embodiment, Table 6.2.3.7.3.3-3 of 3GPP TS 29.503 V17.1.0 may be amended as following:

**Table 6.2.3.7.3.3-3: Data structures supported by the GET Response Body on this resource**

| **Data type** | **P** | **Cardynality** | **Response codes** | **Description** |
|---|---|---|---|---|
| SmsfRegistration | M | 1 | 200 OK | Upon success, a response body containing the SmsfRegistration shall be returned. |
| ProblemDetails | O | 0.1 | 404 Not Found | The "cause" attribute may be used to indicate one of the following application errors: |
| | | | | - CONTEXT_NOT_FOUND |
| | | | | - USER_NOT_FOUND |
| | | | | - ABSENT_SUBSCRIBER_SM |
| ProblemDetails | O | 0.1 | 403 Forbidden | The "cause" attribute may be used to indicate one of the following application errors: |
| | | | | - MTSMS BARRED |
| | | | | - MTSMS NOT PROVISIONED |
| NOTE: In addition common data structures as listed in table 5.2.7.1-1 of 3GPP TS 29.500 [4] are supported. | | | | |

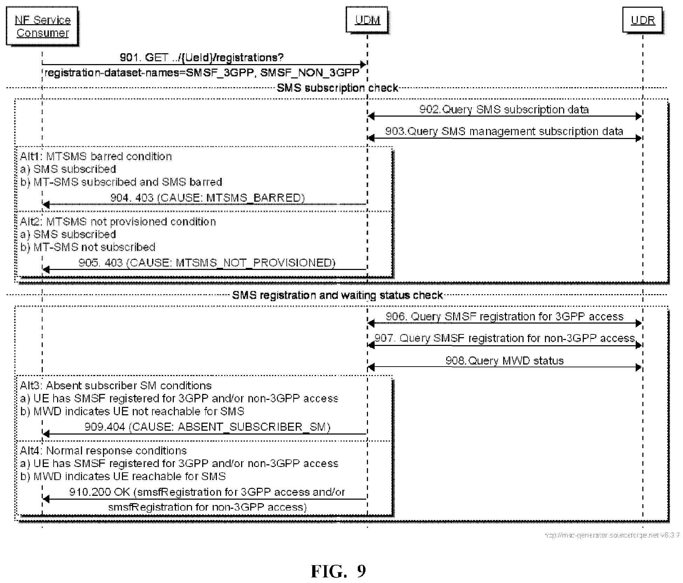

FIG. 9 shows a flowchart of retrieval of SMSF registration data for non-3GPP access and SMSF registration data for 3GPP access according to an embodiment of the present disclosure.

At step 901, an NF service consumer such as NEF sends a GET (such as HTTP GET) request to the resource representing the UE's registrations information with a query parameter of registration-data-names for SMSF of both 3GPP access and non-3GPP access.

UDM firstly is enhanced with the SMS subscription check steps by getting the UE's SMS subscription data and SMS management subscription data from UDR in step 902 and step 903 correspondingly.

At step 902, UDM may query UDR to get the UE's SMS subscription data. In the SMS subscription data, it may comprise subscription on whether the UE (or the user of the UE) has subscribed SMS.

At step 903, UDM may query UDR to get the UE's SMS management subscription data. In the SMS management subscription data, it may comprise the UE's (or the user of the UE) subscription on MO-SMS and MT-SMS and barring control policy.

At step 904, if a call barred condition is met, e.g., the UE has subscribed SMS and the MT-SMS is barred for the registered visiting PLMN or for all PLMNs, a HTTP 403 error response is returned with CAUSE: MTSMS_BARRED indicated in the problemDetails of the HTTP 403 error response.

At step 905, if a teleservice not provisioned condition is met, e.g., the UE has subscribed SMS but MT-SMS is not provisioned, a HTTP 403 error response is returned with CAUSE: MTSMS_NOT_PROVISIONED indicated in the problemDetails of the HTTP 403 error response.

UDM secondly is enhanced with the SMS registration and waiting status check steps by getting the UE's SMSF registration data and SMS waiting status data from UDR in step 906, step 907 and step 908 correspondingly.

At step 906, UDM may query UDR to get the UE's SMSF registration data for 3GPP access.

At step 907, UDM may query UDR to get the UE's SMSF registration data for non-3GPP access.

In another embodiment, step 906 and step 907 could be a single GET operation towards UDR to get both SMSF registration data for 3GPP access and SMSF registration data for non-3GPP access.

At step 908, UDM may query UDR to get the UE's SMS waiting status data. In the SMS waiting status data, it may indicated whether UE is reachable for SMS.

At step 909, if an absent subscriber for SM condition is met, e.g., the UE has SMSF registered for non-3GPP access and/or 3GPP access and the SMS waiting data status indicates that the UE is not reachable for SMS, a HTTP 404 error response is returned with CAUSE: ABSENT_SUBSCRIBER_SM indicated in the problemDetails of the HTTP 404 error response.

Based on the new cause code ABSENT_SUBSCRIBER_SM, the NF service consumer may further ask UDM to add SC address into the SMS waiting data list. So once UE is reachable for SMS, UDM could alert the SC for retransmitting of the pending SMS.

At step 910, if a normal response condition is met, e.g., the UE has SMSF registered for 3GPP access and/or SMSF registered for non-3GPP access and the SMS waiting data status indicated that the UE is reachable for SMS, a HTTP 200 OK response is returned with SMSF registration data for 3GPP access and SMSF registration data for non-3GPP access, or one of them if SMS waiting status indicates that the UE is reachable for 3GPP access or non-3GPP access.

The MTSMS_BARRED or MTSMS_NOT_PROVISIONED or ABSENT_SUBSCRIBER_SM cause code described above are not supported in the 3GPP protocol as described in 3GPP TS 29.503 V17.1.0, so the proposed embodiments can enhance the 3GPP protocol to indicate such condition to the NF service consumer.

In an embodiment, Table 6.2.3.9.3.1-3 of 3GPP TS 29.503 V17.1.0 may be amended as following:

**Table 6.2.3.9.3.1-3: Data structures supported by the GET Response Body on this resource**

| **Data type** | **P** | **Cardinality** | **Response codes** | **Description** |
|---|---|---|---|---|
| RegistrationDataSets | M | 1 | 200 OK | Upon success, a response body containing all the requested UE registration data sets shall be returned. |
| ProblemDetails | O | 0.1 | 404 Not Found | The "cause" attribute shall be set to one of the following application errors: |
| | | | | - CONTEXT_NOT_FOUND |
| | | | | - USER_NOT_FOUND |
| | | | | - ABSNET_SUBSCRIBER_SM (applicable to SMSF registration data sets retrieval) |
| ProblemDetails | O | 0.1 | 403 Forbidden | The "cause" attribute may be used to indicate one of the following application error for SMSF data sets retrieval: |
| | | | | - MTSMS BARRED |
| | | | | - MTSMS NOT PROVISIONED |
| NOTE: In addition common data structures as listed in table 5.2.7.1-1 of 3GPP TS 29.500 [4] are supported. | | | | |

In an embodiment, Table 6.2.7.3-1 of 3GPP TS 29.503 V17.1.0 may be amended as following.

**Table 6.2.7.3-1: Application errors**

| **Application Error** | **HTTP status code** | **Description** |
|---|---|---|
| NF_CONSUMER_REDIRECT_ONE_TXN | 307 Temporary Redirect | The request has been asked to be redirected to a specified target for one transaction. |
| CONTEXT_NOT_FOUND | 308 Permanent Redirect | The request has been asked to be redirected to a specified target. |
| UNKNOWN_5GS_SUBSCRIPTION | 403 Forbidden | No 5GS subscription is associated with the user. |
| NO_PS_SUBSCRIPTION | 403 Forbidden | No PS (5GS, EPS, GPRS) subscription is associated with the user. |
| ROAMING_NOT_ALLOWED | 403 Forbidden | The subscriber is not allowed to roam within that PLMN |
| USER_NOT_FOUND | 404 Not Found | The user does not exist in the HPLMN |
| CONTEXT_NOT_FOUND | 404 Not Found | It is used when no corresponding context exists. |
| ACCESS_NOT_ALLOWED | 403 Forbidden | Access type not allowed for the user. |
| RAT_NOT_ALLOWED | 403 Forbidden | RAT is not allowed for the user |
| DNN_NOT_ALLOWED | 403 Forbidden | DNN not authorized for the user |
| REAUTHENTICATION_REQUIRED | 403 Forbidden | Due to operator policies the user needs to be re-authenticated, e.g. last valid authentication is considered obsolete |
| INVALID_GUAMI | 403 Forbidden | The AMF is not allowed to modify the registration information stored in the UDM, as it is not the registered AMF. |
| SERVICE_NOT_PROVISIONED | 403 Forbidden | The request is related to a service that is not provisioned for the user in the 5GS subscription data (e.g. SMS teleservice not provisioned). |
| SERVICE_NOT_ALLOWED | 403 Forbidden | The request is related to a service that is not allowed for the user in the 5GS subscription data (e.g. SMS is barred). |
| TEMPORARY_REJECT_REGISTRATION | 409 Conflict | The request cannot be proccesed due to an ongoing registration procedure. |
| TEMPORARY_REJECT_HANDOVER_ONGOING _ONGOING | 409 Conflict | The request cannot be proccesed due to an ongoing N2 handover procedure. |
| UNPROCESSABLE_REQUEST | 422 Unprocessable Entity | The request cannot be proccesed due to semantic errors when trying to process a patch method |
| ABSENT_SUBSCRIBER_SM | 404 Not Found | The user is not reachable for |
| | | MT-SMS |
| MTSMS BARRED | 403 Forbidden | MT-SMS is barred for the user |
| | | |
| MTSMS NOT PROVISIONED | 403 Forbidden | MT-SMS is not subscribed for |
| | | the user |

In an embodiment, the proposed solution may extend the cause codes (such as HTTP status codes ) for interfaces to GET SMSF registration information as SMS routing information:
- 403, CAUSE: MTSMS_BARRED for cases UE has SMS subscribed but MT-SMS is barred for the registered visiting PLMN or for all
- 403, CAUSE: MTSMS_NOT_PROVISIONED for cases UE has SMS subscribed but MT-SMS is not provisioned
- 404, CAUSE: ABSENT_SUBSCRIBER_SM for cases UE has SMSF registered but SMS waiting data indicates UE is not reachable for SMS

Embodiments herein may provide many advantages, of which a non-exhaustive list of examples follows. In some embodiments herein, the second network fucntion can send a correct status code indicating the error related to routing of the UE for the service to the first network fucntion. For example, a correct cause may be sent to the consumer of UDM UECM GET service for SMS routing information requests, such as ABSENT_SUBSCRIBER_SM, MTSMS_BARRED, MTSMS_NOT_PROVISIONED etc. In some embodiments herein, the NF consumer can differentiate the error conditions. In some embodiments herein, the propose solution can avoid unnecessary signaling for example when the UE is not reachable for the service such as SMS. In some embodiments herein, the first network function can request the second network function to alert a function of the service when the UE is reachable for the service. For example, the service consumer could ask UDM to add SC address into SMS waiting data list. Once the UE is reachable for SMS, UDM could alert the SC for retransmitting of the pending SMS. In some embodiments herein, the service such as SMS delivery can be optimized. The embodiments herein are not limited to the features and advantages mentioned above. A person skilled in the art will recognize additional features and advantages upon reading the following detailed description.

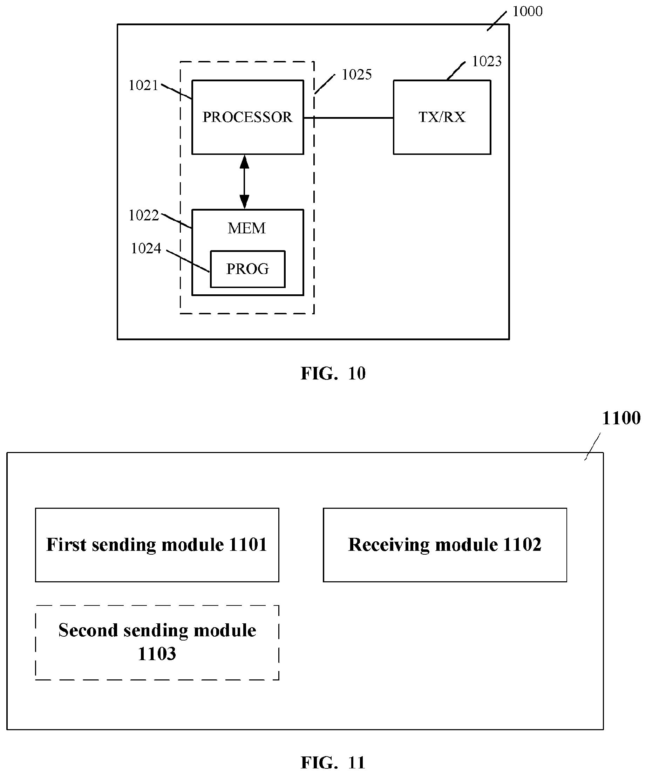

FIG.10 is a block diagram showing an apparatus suitable for practicing some embodiments of the disclosure. For example, any one of the first network function and the second network function described above may be implemented as or through the apparatus 1000.

The apparatus 1000 comprises at least one processor 1021, such as a digital processor (DP), and at least one memory (MEM) 1022 coupled to the processor 1021. The apparatus 1020 may further comprise a transmitter TX and receiver RX 1023 coupled to the processor 1021. The MEM 1022 stores a program (PROG) 1024. The PROG 1024 may include instructions that, when executed on the associated processor 1021, enable the apparatus 1020 to operate in accordance with the embodiments of the present disclosure. A combination of the at least one processor 1021 and the at least one MEM 1022 may form processing means 1025 adapted to implement various embodiments of the present disclosure.

Various embodiments of the present disclosure may be implemented by computer program executable by one or more of the processor 1021, software, firmware, hardware or in a combination thereof.

The MEM 1022 may be of any type suitable to the local technical environment and may be implemented using any suitable data storage technology, such as semiconductor based memory devices, magnetic memory devices and systems, optical memory devices and systems, fixed memories and removable memories, as non-limiting examples.

The processor 1021 may be of any type suitable to the local technical environment, and may include one or more of general purpose computers, special purpose computers, microprocessors, digital signal processors (DSPs) and processors based on multicore processor architecture, as non-limiting examples.

In an embodiment where the apparatus is implemented as or at the first network function, the memory 1022 contains instructions executable by the processor 1021, whereby the first network function operates according to any of the methods related to the first network function as described above.

In an embodiment where the apparatus is implemented as or at the second network function, the memory 1022 contains instructions executable by the processor 1021, whereby the second network function operates according to any of the methods related to the second network function as described above.

FIG.11 is a block diagram showing a first network function according to an embodiment of the disclosure. As shown, the first network function 1100 comprises a first sending module 1101 and a receiving module 1102. The first sending module 1101 may be configured to send a first request to a second network function. The first request requests to receive at least one registration data set for a service for a user equipment (UE). The receiving module 1102 may be configured to receive a first response from the second network function. When there is an error related to routing of the UE for the service, the first response comprises a status code indicating the error related to routing of the UE for the service. When there is no the error related to routing of the UE for the service, the first response comprises the at least one registration data set for the service for the UE

In an embodiment, the first network function 1100 may further comprise a second sending module 1103 configured to, when the error related to routing of the UE for the service indicates that the UE has subscribed the service but the UE is not reachable for the service, send a second request to the second network function. The second request requests to alert a function of the service when the UE is reachable for the service.

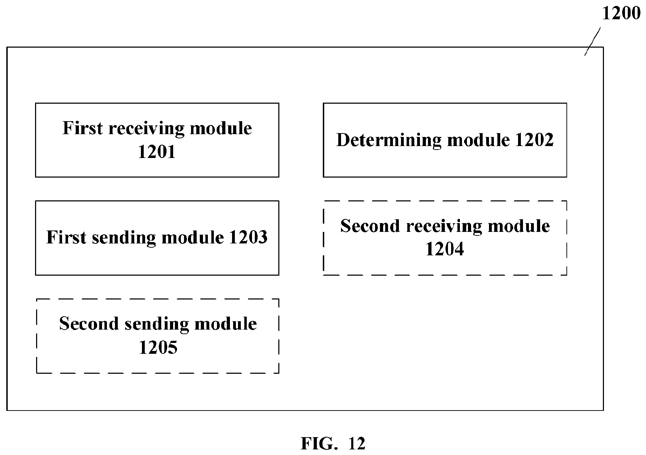

FIG.12 is a block diagram showing a second network function according to an embodiment of the disclosure. As shown, the second network function 1200 comprises a first receiving module 1201, a determining module 1202 and a first sending module 1203. The first receiving module 1201 may be configured to receive a first request from a first network function. The first request requests to receive at least one registration data set for a service for a user equipment (UE). The determining module 1202 may be configured to determine whether there is an error related to routing of the UE for the service. The first sending module 1203 may be configured to send a first response to the first network function. When there is an error related to routing of the UE for the service, the first response comprises a status code indicating the error related to routing of the UE for the service. When there is no the error related to routing of the UE for the service, the first response comprises the at least one registration data set for the service for the UE

In an embodiment, the second network function 1200 may further comprise a second receiving module 1204 configured to, when the error related to routing of the UE for the service indicates that the UE has subscribed the service but the UE is not reachable for the service, receive a second request from the first network function. The second request requests to alert a function of the service when the UE is reachable for the service.

In an embodiment, the second network function 1200 may further comprise a second sending module 1205 configured to send an alerting message indicating that the UE is reachable for the service to the function of the service.

The term unit or module may have conventional meaning in the field of electronics, electrical devices and/or electronic devices and may include, for example, electrical and/or electronic circuitry, devices, modules, processors, memories, logic solid state and/or discrete devices, computer programs or instructions for carrying out respective tasks, procedures, computations, outputs, and/or displaying functions, and so on, as such as those that are described herein.

With function units, the first network function and the second network function may not need a fixed processor or memory, any computing resource and storage resource may be arranged from the first network function and the second network function in the communication system. The introduction of virtualization technology and network computing technology may improve the usage efficiency of the network resources and the flexibility of the network.

According to an aspect of the disclosure it is provided a computer program product being tangibly stored on a computer readable storage medium and including instructions which, when executed on at least one processor, cause the at least one processor to carry out any of the methods as described above.

According to an aspect of the disclosure it is provided a computer-readable storage medium storing instructions which when executed by at least one processor, cause the at least one processor to carry out any of the methods as described above.

In addition, the present disclosure may also provide a carrier containing the computer program as mentioned above, wherein the carrier is one of an electronic signal, optical signal, radio signal, or computer readable storage medium. The computer readable storage medium can be, for example, an optical compact disk or an electronic memory device like a RAM (random access memory), a ROM (read only memory), Flash memory, magnetic tape, CD-ROM, DVD, Blue-ray disc and the like.

The techniques described herein may be implemented by various means so that an apparatus implementing one or more functions of a corresponding apparatus described with an embodiment comprises not only prior art means, but also means for implementing the one or more functions of the corresponding apparatus described with the embodiment and it may comprise separate means for each separate function, or means that may be configured to perform two or more functions. For example, these techniques may be implemented in hardware (one or more apparatuses), firmware (one or more apparatuses), software (one or more modules), or combinations thereof. For a firmware or software, implementation may be made through modules (e.g., procedures, functions, and so on) that perform the functions described herein.

Exemplary embodiments herein have been described above with reference to block diagrams and flowchart illustrations of methods and apparatuses. It will be understood that each block of the block diagrams and flowchart illustrations, and combinations of blocks in the block diagrams and flowchart illustrations, respectively, can be implemented by various means including computer program instructions. These computer program instructions may be loaded onto a general purpose computer, special purpose computer, or other programmable data processing apparatus to produce a machine, such that the instructions which execute on the computer or other programmable data processing apparatus create means for implementing the functions specified in the flowchart block or blocks.

Further, while operations are depicted in a particular order, this should not be understood as requiring that such operations be performed in the particular order shown or in sequential order, or that all illustrated operations be performed, to achieve desirable results. In certain circumstances, multitasking and parallel processing may be advantageous. Likewise, while several specific implementation details are contained in the above discussions, these should not be construed as limitations on the scope of the subject matter described herein, but rather as descriptions of features that may be specific to particular embodiments. Certain features that are described in the context of separate embodiments may also be implemented in combination in a single embodiment. Conversely, various features that are described in the context of a single embodiment may also be implemented in multiple embodiments separately or in any suitable sub-combination.

While this specification contains many specific implementation details, these should not be construed as limitations on the scope of any implementation or of what may be claimed, but rather as descriptions of features that may be specific to particular embodiments of particular implementations. Certain features that are described in this specification in the context of separate embodiments can also be implemented in combination in a single embodiment. Conversely, various features that are described in the context of a single embodiment can also be implemented in multiple embodiments separately or in any suitable sub-combination. Moreover, although features may be described above as acting in certain combinations and even initially claimed as such, one or more features from a claimed combination can in some cases be excised from the combination, and the claimed combination may be directed to a sub-combination or variation of a sub-combination.

It will be obvious to a person skilled in the art that, as the technology advances, the inventive concept can be implemented in various ways. The above described embodiments are given for describing rather than limiting the disclosure, and it is to be understood that modifications and variations may be resorted to without departing from the scope of the disclosure as those skilled in the art readily understand. Such modifications and variations are considered to be within the scope of the disclosure and the appended claims. The protection scope of the disclosure is defined by the accompanying claims.

## Claims

1. A method (400) performed by a first network function, comprising:
sending (402) a first request to a second network function, wherein the first request requests to receive at least one registration data set for a service for a user equipment, UE;
receiving (404) a first response from the second network function,
wherein when there is an error related to routing of the UE for the service, the first response comprises a status code indicating the error related to routing of the UE for the service,
wherein when there is no the error related to routing of the UE for the service, the first response comprises the at least one registration data set for the service for the UE; and
when the error related to routing of the UE for the service indicates that the UE has subscribed the service but the UE is not reachable for the service, sending (406) a second request to the second network function, wherein the second request requests to alert a function of the service when the UE is reachable for the service.

2. The method according to claim 1, wherein the status code indicating an error related to routing of the UE for the service comprises at least one of:
403 Forbidden of HyperText Transfer Protocol, HTTP, status code with a cause attribute used to indicate the error related to routing of the UE for the service; or
404 Not Found of HTTP status code with a cause attribute used to indicate the error related to routing of the UE for the service.

3. The method according to claim 1 or 2, wherein the error related to routing of the UE for the service comprises at least one of:
the UE has subscribed the service but a subservice of the service is barred;
the UE has subscribed the service but a subservice of the service is not provisioned; or
the UE has subscribed the service but the UE is not reachable for the service;
and wherein, optionally, the subservice of the service comprises at least one of:
mobile terminated service, or
mobile originated service.

4. The method according to any of claims 1-3, wherein:
{i} the service comprises short message service; and/or
{ii} the at least one registration data set for the service for the UE comprises at least one of:
the UE's Short Message Service Function, SMSF, registration information for third Generation Partnership Project, 3GPP, access; or
the UE's SMSF registration information for non-3GPP access.

5. The method according to any of claims 1-4, wherein:
{i} the first network function comprises at least one of:
Short Message Service-Gateway Mobile Switching Centre, SMS-GMSC,
Internet protocol-Short Message-Gateway, IP-SM-GW, SMS-router,
Service Capability Exposure Function, SCEF, or
Network Exposure Function, NEF; and/or
{ii} the second network function comprises at least one of:
unified data management, UDM,
home subscriber server, HSS, or
home location register, HLR; and/or
{iii} the first request is an HTTP GET request and the first response is an HTTP GET response.

6. A method (500) performed by a second network function, comprising:
receiving (502) a first request from a first network function, wherein the first request requests to receive at least one registration data set for a service for a user equipment, UE;
determining (504) whether there is an error related to routing of the UE for the service;
sending (506) a first response to the first network function,
wherein when there is the error related to routing of the UE for the service, the first response comprises a status code indicating the error related to routing of the UE for the service,
wherein when there is no the error related to routing of the UE for the service, the first response comprises the at least one registration data set for the service for the UE; and
when the error related to routing of the UE for the service indicates that the UE has subscribed the service but the UE is not reachable for the service, receiving (602) a second request from the first network function, wherein the second request requests to alert a function of the service when the UE is reachable for the service; and
sending (604) an alerting message indicating that the UE is reachable for the service to the function of the service.

7. The method according to claim 6, wherein the status code indicating an error related to routing of the UE for the service comprises at least one of:
403 Forbidden of HyperText Transfer Protocol, HTTP, status code with a cause attribute used to indicate the error related to routing of the UE for the service; or
404 Not Found of HTTP status code with a cause attribute used to indicate the error related to routing of the UE for the service.

8. The method according to claim 6 or 7, wherein the error related to routing of the UE for the service comprises at least one of:
the UE has subscribed the service but a subservice of the service is barred;
the UE has subscribed the service but a subservice of the service is not provisioned; or
the UE has subscribed the service but the UE is not reachable for the service;
and wherein, optionally, the subservice of the service comprises at least one of:
mobile terminated service, or
mobile originated service.

9. The method according to any of claim 6 to 8, wherein:
{i} the service comprises short message service; and/or
{ii} the at least one registration data set for the service for the UE comprises at least one of:
the UE's Short Message Service Function, SMSF, registration information for third Generation Partnership Project, 3GPP, access; or
the UE's SMSF registration information for non-3GPP access;
and/or
{iii} the first network function comprises at least one of:
Short Message Service-Gateway Mobile Switching Centre, SMS-GMSC, Internet protocol-Short Message-Gateway, IP-SM-GW, SMS-router,
Service Capability Exposure Function, SCEF, or
Network Exposure Function, NEF;
and/or
{v} the second network function comprises at least one of:
unified data management, UDM,
home subscriber server, HSS, or
home location register, HLR;
and/or
{vi} the first request is an HTTP GET request and the first response is an HTTP GET response.

10. The method according to any of claims 6 to 9, wherein:
determining whether there is an error related to routing of the UE for the service comprises:
obtaining subscription data of the service of the UE, wherein the subscription data of the service of the UE comprises subscription information regarding whether the UE has subscribed the service;
obtaining management subscription data of the service of the UE, wherein the management subscription data of the service of the UE comprises subscription information regarding whether the UE has subscribed a subservice of the service and/or a barring control policy; and
determining whether there is an error related to routing of the UE for the service based on the subscription data of the service of the UE and the management subscription data of the service of the UE; and wherein, optionally,
at least one of the subscription data of the service of the UE and the management subscription data of the service of the UE is obtained from Unified Data Repository, UDR.

11. The method according to any of claims 6 to 10, wherein:
determining whether there is an error related to routing of the UE for the service comprises:
obtaining registration data of a function of the service for the UE;
obtaining waiting status data of the service for the UE, wherein the waiting status data of the service for the UE comprises information regarding whether the UE is reachable for the service; and
determining whether there is an error related to routing of the UE for the service based on the registration data of the function of the service for the UE and the waiting status data of the service for the UE; and wherein, optionally,
at least one of the registration data of the function of the service for the UE and the waiting status data of the service for the UE is obtained from UDR.

12. A first network function (1000), comprising:
a processor (1021); and
a memory (1022) coupled to the processor (1021), said memory (1022) containing instructions executable by said processor (1021), wherein the first network function (1000) is operative to perform the method of any one of claims 1 to 5.

13. A second network function (1000), comprising:
a processor (1021); and
a memory (1022) coupled to the processor (1021), said memory (1022) containing instructions executable by said processor (1021), wherein the second network function is operative to perform the method of any one of claims 6 to 11.

14. A computer-readable storage medium storing instructions which when executed by at least one processor, cause the at least one processor to perform the method according to any one of claims 1 to 11.

15. A computer program product comprising instructions which when executed by at least one processor, cause the at least one processor to perform the method according to any one of claims 1 to 11.

## Patentansprüche

1. Verfahren (400), das von einer ersten Netzwerkfunktion durchgeführt wird, umfassend:
Senden (402) einer ersten Anforderung an eine zweite Netzwerkfunktion, wobei die erste Anforderung anfordert, mindestens einen Registrierungsdatensatz für einen Dienst für eine Benutzereinrichtung, UE, zu empfangen;
Empfangen (404) einer ersten Antwort von der zweiten Netzwerkfunktion,
wobei, wenn ein Fehler in Bezug auf das Routing der UE für den Dienst vorliegt, die erste Antwort einen Statuscode umfasst, der den Fehler in Bezug auf das Routing der UE für den Dienst angibt,
wobei, wenn kein Fehler in Bezug auf das Routing der UE für den Dienst vorliegt, die erste Antwort den mindestens einen Registrierungsdatensatz für den Dienst für die UE umfasst; und
wenn der Fehler in Bezug auf das Routing der UE für den Dienst angibt, dass die UE den Dienst abonniert hat, aber die UE für den Dienst nicht erreichbar ist, Senden (406) einer zweiten Anforderung an die zweite Netzwerkfunktion, wobei die zweite Anforderung anfordert, auf eine Funktion des Dienstes aufmerksam zu machen, wenn die UE für den Dienst erreichbar ist.

2. Verfahren nach Anspruch 1, wobei der Statuscode, der einen Fehler in Bezug auf das Routing der UE für den Dienst angibt, mindestens eines von Folgendem umfasst:
Statuscode 403 Forbidden of HyperText Transfer Protocol, HTTP, mit einem Ursachenattribut, das verwendet wird, um den Fehler in Bezug auf das Routing der UE für den Dienst anzugeben; oder
Statuscode 404 Not Found of HTTP mit einem Ursachenattribut, das verwendet wird, um den Fehler in Bezug auf das Routing der UE für den Dienst anzugeben.

3. Verfahren nach Anspruch 1 oder 2, wobei der Fehler in Bezug auf das Routing der UE für den Dienst mindestens eines von Folgendem umfasst:
die UE hat den Dienst abonniert, aber ein Teildienst des Dienstes ist gesperrt;
die UE hat den Dienst abonniert, aber ein Teildienst des Dienstes wird nicht bereitgestellt; oder
die UE hat den Dienst abonniert, aber die UE ist nicht für den Dienst erreichbar; und wobei gegebenenfalls der Teildienst des Dienstes mindestens eines von Folgendem umfasst:
einem Mobile Terminated Service oder
einem Mobile Originated Service.

4. Verfahren nach einem der Ansprüche 1-3, wobei:
{i} der Dienst Short Message Service umfasst; und/oder
{ii} der mindestens eine Registrierungsdatensatz für den Dienst für die UE mindestens eines von Folgendem umfasst:
Registrierungsinformationen für die Short Message Service Function, SMSF, der UE für den Zugang mittels Third Generation Partnership Project, 3GPP; oder
Registrierungsinformationen für die SMSF der UE für Nicht-3GPP-Zugang.

5. Verfahren nach einem der Ansprüche 1-4, wobei:
{i} die erste Netzwerkfunktion mindestens eines von Folgendem umfasst:
Short Message Service-Gateway Mobile Switching Centre, SMS-GMSC,
Internetprotokoll-Short Message-Gateway, IP-SM-GW, SMS-Router,
Service Capability Exposure Function, SCEF, oder Network Exposure Function, NEF; und/oder
{ii} die zweite Netzwerkfunktion mindestens eines von Folgendem umfasst:
Unified Data Management, UDM,
Home Subscriber Server, HSS, oder
Home Location Register, HLR; und/oder
{iii} die erste Anforderung eine HTTP-GET-Anforderung ist und die erste Antwort eine HTTP-GET-Antwort ist.

6. Verfahren (500), das von einer zweiten Netzwerkfunktion durchgeführt wird, umfassend:
Empfangen (502) einer ersten Anforderung von einer ersten Netzwerkfunktion, wobei die erste Anforderung anfordert, mindestens einen Registrierungsdatensatz für einen Dienst für eine Benutzereinrichtung, UE, zu empfangen;
Bestimmen (504), ob ein Fehler in Bezug auf das Routing der UE für den Dienst vorliegt;
Senden (506) einer ersten Antwort an die erste Netzwerkfunktion,
wobei, wenn der Fehler in Bezug auf das Routing der UE für den Dienst vorliegt, die erste Antwort einen Statuscode umfasst, der den Fehler in Bezug auf das Routing der UE für den Dienst angibt,
wobei, wenn kein Fehler in Bezug auf das Routing der UE für den Dienst vorliegt, die erste Antwort den mindestens einen Registrierungsdatensatz für den Dienst für die UE umfasst; und
wenn der Fehler in Bezug auf das Routing der UE für den Dienst angibt, dass die UE den Dienst abonniert hat, aber die UE für den Dienst nicht erreichbar ist, Empfangen (602) einer zweiten Anforderung von der zweiten Netzwerkfunktion, wobei die zweite Anforderung anfordert, auf eine Funktion des Dienstes aufmerksam zu machen, wenn die UE für den Dienst erreichbar ist; und
Senden (604) einer Warnmeldung, die angibt, dass die UE für den Dienst erreichbar ist, an die Funktion des Dienstes.

7. Verfahren nach Anspruch 6, wobei der Statuscode, der einen Fehler in Bezug auf das Routing der UE für den Dienst angibt, mindestens eines von Folgendem umfasst:
Statuscode 403 Forbidden of HyperText Transfer Protocol, HTTP, mit einem Ursachenattribut, das verwendet wird, um den Fehler in Bezug auf das Routing der UE für den Dienst anzugeben; oder
Statuscode 404 Not Found of HTTP mit einem Ursachenattribut, das verwendet wird, um den Fehler in Bezug auf das Routing der UE für den Dienst anzugeben.

8. Verfahren nach Anspruch 6 oder 7, wobei der Fehler in Bezug auf das Routing der UE für den Dienst mindestens eines von Folgendem umfasst:
die UE hat den Dienst abonniert, aber ein Teildienst des Dienstes ist gesperrt;
die UE hat den Dienst abonniert, aber ein Teildienst des Dienstes wird nicht bereitgestellt; oder
die UE hat den Dienst abonniert, aber die UE ist nicht für den Dienst erreichbar;
und wobei gegebenenfalls der Teildienst des Dienstes mindestens eines von Folgendem umfasst:
einem Mobile Terminated Service oder
einem Mobile Originated Service.

9. Verfahren nach einem der Ansprüche 6 bis 8, wobei:
{i} der Dienst Short Message Service umfasst; und/oder
{ii} der mindestens eine Registrierungsdatensatz für den Dienst für die UE mindestens eines von Folgendem umfasst:
Registrierungsinformationen für die Short Message Service Function, SMSF, der UE für den Zugang mittels Third Generation Partnership Project, 3GPP; oder
Registrierungsinformationen für die SMSF der UE für Nicht-3GPP-Zugang; und/oder
{iii} die erste Netzwerkfunktion mindestens eines von Folgendem umfasst:
Short Message Service-Gateway Mobile Switching Centre, SMS-GMSC,
Internetprotokoll-Short Message-Gateway, IP-SM-GW, SMS-Router,
Service Capability Exposure Function, SCEF, oder Network Exposure Function, NEF;
und/oder
{v} die zweite Netzwerkfunktion mindestens eines von Folgendem umfasst:
Unified Data Management, UDM,
Home Subscriber Server, HSS, oder
Home Location Register, HLR;
und/oder
{vi} die erste Anforderung eine HTTP-GET-Anforderung ist und die erste Antwort eine HTTP-GET-Antwort ist.

10. Verfahren nach einem der Ansprüche 6 bis 9, wobei:
das Bestimmen, ob ein Fehler in Bezug auf das Routing der UE für den Dienst vorliegt, Folgendes umfasst:
Erhalten von Abonnementdaten des Dienstes der UE, wobei die Abonnementdaten des Dienstes der UE Abonnementinformationen in Bezug darauf umfassen, ob die UE den Dienst abonniert hat;
Erhalten von Verwaltungsabonnementdaten des Dienstes der UE, wobei die Verwaltungsabonnementdaten des Dienstes der UE Abonnementinformationen in Bezug darauf umfassen, ob die UE einen Teildienst des Dienstes abonniert hat, und/oder einer Sperrkontrollrichtlinie;
Bestimmen, ob ein Fehler in Bezug auf das Routing der UE für den Dienst vorliegt, auf Grundlage der Abonnementdaten des Dienstes der UE und der Verwaltungsabonnementdaten des Dienstes der UE; und wobei gegebenenfalls mindestens eines der Abonnementdaten des Dienstes der UE und der Verwaltungsabonnementdaten des Dienstes der UE von einem Unified Data Repository, UDR, erhalten wird.

11. Verfahren nach einem der Ansprüche 6 bis 10, wobei:
das Bestimmen, ob ein Fehler in Bezug auf das Routing der UE für den Dienst vorliegt, Folgendes umfasst:
Erhalten von Registrierungsdaten einer Funktion des Dienstes für die UE;
Erhalten von Wartestatusdaten des Dienstes für die UE, wobei die Wartestatusdaten des Dienstes für die UE Informationen darüber umfasst, ob die UE für den Dienst erreichbar ist; und
Bestimmen, ob ein Fehler in Bezug auf das Routing der UE für den Dienst vorliegt, auf Grundlage der Registrierungsdaten der Funktion des Dienstes für die UE und der Wartestatusdaten des Dienstes für die UE; und wobei gegebenenfalls
mindestens eines der Registrierungsdaten der Funktion des Dienstes für die UE und der Wartestatusdaten des Dienstes für die UE von dem UDR erhalten wird.

12. Erste Netzwerkfunktion (1000), umfassend:
einen Prozessor (1021); und
einen Speicher (1022), der an den Prozessor (1021) gekoppelt ist, wobei der Speicher (1022) Anweisungen enthält, die von dem Prozessor (1021) ausführbar sind, wobei die erste Netzwerkfunktion (1000) betreibbar ist, um das Verfahren nach einem der Ansprüche 1 bis 5 durchzuführen.

13. Zweite Netzwerkfunktion (1000), umfassend:
einen Prozessor (1021); und
einen Speicher (1022), der an den Prozessor (1021) gekoppelt ist, wobei der Speicher (1022) Anweisungen enthält, die von dem Prozessor (1021) ausführbar sind, wobei die zweite Netzwerkfunktion betreibbar ist, um das Verfahren nach einem der Ansprüche 6 bis 11 durchzuführen.

14. Computerlesbares Speichermedium, auf dem Anweisungen gespeichert sind, die bei Ausführung durch mindestens einen Prozessor den mindestens einen Prozessor dazu veranlassen, das Verfahren nach einem der Ansprüche 1 bis 11 durchzuführen.

15. Computerprogrammprodukt, das Anweisungen umfasst, die bei Ausführung durch mindestens einen Prozessor den mindestens einen Prozessor dazu veranlassen, das Verfahren nach einem der Ansprüche 1 bis 11 durchzuführen.

## Revendications

1. Procédé (400) mis en œuvre par une première fonction réseau, comprenant :
l'envoi (402) d'une première demande à une deuxième fonction réseau, dans lequel la première demande demande de recevoir au moins un ensemble de données d'enregistrement pour un service pour un équipement utilisateur, UE ;
la réception (404) d'une première réponse à partir de la deuxième fonction réseau,
dans lequel lorsqu'il y a une erreur liée au routage de l'UE pour le service, la première réponse comprend un code d'état indiquant l'erreur liée au routage de l'UE pour le service,
dans lequel, lorsqu'il n'y a pas d'erreur liée au routage de l'UE pour le service, la première réponse comprend l'au moins un ensemble de données d'enregistrement pour le service pour l'UE ; et
lorsque l'erreur liée au routage de l'UE pour le service indique que l'UE est abonné au service mais que l'UE n'est pas joignable pour le service, l'envoi (406) d'une deuxième requête à la deuxième fonction réseau, dans lequel la deuxième demande demande d'alerter une fonction du service lorsque l'UE est joignable pour le service.

2. Procédé selon la revendication 1, dans lequel le code d'état indiquant une erreur liée au routage de l'UE pour le service comprend au moins un élément parmi :
403 Interdit du code d'état de protocole de transfert hypertexte, HTTP, avec un attribut de cause utilisé pour indiquer l'erreur liée au routage de l'UE pour le service ; ou
404 Non trouvé de code d'état de HTTP avec un attribut de cause utilisé pour indiquer l'erreur liée au routage de l'UE pour le service.

3. Procédé selon la revendication 1 ou 2, dans lequel l'erreur liée au routage de l'UE pour le service comprend au moins un élément parmi :
l'UE est abonné au service mais un sous-service du service est interdit ;
l'UE est abonné au service mais un sous-service du service n'est pas fourni ; ou
l'UE est abonné au service mais l'UE n'est pas joignable pour le service ; et dans lequel, éventuellement, le sous-service du service comprend au moins un élément parmi :
un service à terminaison mobile, ou
un service d'origine mobile.

4. Procédé selon l'une quelconque des revendications 1 à 3, dans lequel :
{i} le service comprend un service de message court ; et/ou
{ii} l'au moins un ensemble de données d'enregistrement pour le service pour l'UE comprend au moins un élément parmi :
les informations d'enregistrement de fonction de service de message court, SMSF, de l'UE pour l'accès de projet de partenariat de troisième génération, 3GPP ; ou
les informations d'enregistrement de SMSF de l'UE pour l'accès de non 3GPP.

5. Procédé selon l'une quelconque des revendications 1 à 4, dans lequel :
{i} la première fonction réseau comprend au moins un élément parmi :
un centre de commutation mobile de passerelle de service de message court, SMS-GMSC,
un protocole Internet-passerelle de message court, IP-SM-GW,
un routeur SMS,
une fonction d'exposition des capacités de service, SCEF, ou
une fonction d'exposition de réseau, NEF ; et/ou
{ii} la deuxième fonction réseau comprend au moins un élément parmi :
une gestion unifiée des données, UDM,
un serveur d'abonné de domicile, HSS, ou
un registre de localisation de domicile, HLR ; et/ou {iii} la première demande est une demande de HTTP GET et la première réponse est une réponse de HTTP GET.

6. Procédé (500) mis en œuvre par une deuxième fonction réseau, comprenant :
la réception (502) d'une première demande provenant d'une première fonction réseau, dans lequel la première demande demande de recevoir au moins un ensemble de données d'enregistrement pour un service pour un équipement utilisateur, UE ;
la détermination (504) s'il existe une erreur liée au routage de l'UE pour le service ;
l'envoi (506) d'une première réponse à la première fonction réseau,
dans lequel lorsqu'il y a l'erreur liée au routage de l'UE pour le service, la première réponse comprend un code d'état indiquant l'erreur liée au routage de l'UE pour le service,
dans lequel, lorsqu'il n'y a pas d'erreur liée au routage de l'UE pour le service, la première réponse comprend au moins un ensemble de données d'enregistrement pour le service pour l'UE ; et
lorsque l'erreur liée au routage de l'UE pour le service indique que l'UE est abonné au service mais que l'UE n'est pas joignable pour le service, la réception (602) d'une deuxième demande à partir de la première fonction réseau, dans lequel la deuxième demande demande d'alerter une fonction du service lorsque l'UE est joignable pour le service ; et
l'envoi (604) d'un message d'alerte indiquant que l'UE est joignable pour le service à la fonction du service.

7. Procédé selon la revendication 6, dans lequel le code d'état indiquant une erreur liée au routage de l'UE pour le service comprend au moins un élément parmi :
403 Interdit de code d'état de protocole de transfert hypertexte, HTTP, avec un attribut de cause utilisé pour indiquer l'erreur liée au routage de l'UE pour le service ; ou
404 Non trouvé de code d'état de HTTP avec un attribut de cause utilisé pour indiquer l'erreur liée au routage de l'UE pour le service.

8. Procédé selon la revendication 6 ou 7, dans lequel l'erreur liée au routage de l'UE pour le service comprend au moins l'un des éléments suivants :
l'UE est abonné au service mais un sous-service du service est interdit ;
l'UE est abonné au service mais un sous-service du service n'est pas fourni ; ou
l'UE est abonné au service mais l'UE n'est pas joignable pour le service ;
et dans lequel, éventuellement, le sous-service du service comprend au moins un élément parmi :
un service à terminaison mobile, ou
un service d'origine mobile.

9. Procédé selon l'une quelconque des revendications 6 à 8, dans lequel :
{i} le service comprend un service de message court ; et/ou
{ii} l'au moins un ensemble de données d'enregistrement pour le service pour l'UE comprend au moins un élément parmi :
les informations d'enregistrement de fonction de service de message court, SMSF, de l'UE pour l'accès de projet de partenariat de troisième génération, 3GPP ; ou
les informations d'enregistrement de SMSF de l'UE pour l'accès de non 3GPP ; et/ou
{iii} la première fonction réseau comprend au moins un élément parmi :
un centre de commutation mobile de passerelle de service de message court, SMS-GMSC,
un protocole Internet-passerelle de message court, IP-SM-GW,
un routeur SMS,
une fonction d'exposition des capacités de service, SCEF, ou
une fonction d'exposition de réseau, NEF ;
et/ou
{v} la deuxième fonction réseau comprend au moins un élément parmi :
une gestion unifiée des données, UDM,
un serveur d'abonné de domicile, HSS, ou
registre de localisation de domicile, HLR;
et/ou
{vi} la première demande est une demande de HTTP GET et la première réponse est une réponse de HTTP GET.

10. Procédé selon l'une quelconque des revendications 6 à 9, dans lequel :
la détermination s'il existe une erreur liée au routage de l'UE pour le service comprend :
l'obtention de données d'abonnement au service de l'UE, dans lequel les données d'abonnement au service de l'UE comprennent des informations d'abonnement indiquant si l'UE s'est abonné au service ;
l'obtention de données d'abonnement de gestion du service de l'UE, dans lequel les données d'abonnement de gestion du service de l'UE comprennent des informations d'abonnement indiquant si l'UE est abonné à un sous-service du service et/ou à une politique de commande d'interdiction ; et
la détermination s'il existe une erreur liée au routage de l'UE pour le service sur la base des données d'abonnement du service de l'UE et des données d'abonnement de gestion du service de l'UE ; et dans lequel, éventuellement, au moins une parmi les données d'abonnement du service de l'UE et les données d'abonnement de gestion du service de l'UE est obtenue à partir du référentiel de données unifié, UDR.

11. Procédé selon l'une quelconque des revendications 6 à 10, dans lequel :
la détermination s'il existe une erreur liée au routage de l'UE pour le service comprend :
l'obtention de données d'enregistrement d'une fonction du service pour l'UE ;
l'obtention de données d'état d'attente du service pour l'UE, dans lequel les données d'état d'attente du service pour l'UE comprennent des informations indiquant si l'UE est joignable pour le service ; et
la détermination s'il existe une erreur liée au routage de l'UE pour le service sur la base des données d'enregistrement de la fonction du service pour l'UE et des données d'état d'attente du service pour l'UE ; et dans lequel, éventuellement,
au moins une parmi les données d'enregistrement de la fonction du service pour l'UE et les données d'état d'attente du service pour l'UE est obtenue à partir de l'UDR.

12. Première fonction réseau (1000), comprenant :
un processeur (1021) ; et
une mémoire (1022) couplée au processeur (1021), ladite mémoire (1022) contenant des instructions exécutables par ledit processeur (1021), dans lequel la première fonction réseau (1000) est fonctionnelle pour mettre en œuvre le procédé selon l'une quelconque des revendications 1 à 5.

13. Deuxième fonction réseau (1000), comprenant :
un processeur (1021) ; et
une mémoire (1022) couplée au processeur (1021), ladite mémoire (1022) contenant des instructions exécutables par ledit processeur (1021), dans lequel la deuxième fonction réseau est fonctionnelle pour mettre en œuvre le procédé selon l'une quelconque des revendications 6 à 11.

14. Support de stockage lisible par ordinateur stockant des instructions qui, lorsqu'elles sont exécutées par au moins un processeur, amènent l'au moins un processeur à exécuter le procédé selon l'une quelconque des revendications 1 à 11.

15. Produit de programme informatique comprenant des instructions qui, lorsqu'elles sont exécutées par au moins un processeur, amènent l'au moins un processeur à exécuter le procédé selon l'une quelconque des revendications 1 à 11.
